# FASCICULE DE BREVET EUROPEEN

(11) **EP 2 987 025 B1**
(45) Date de publication et mention de la délivrance du brevet: **02.01.2019**
(21) Numéro de dépôt: 14723003.1
(22) Date de dépôt: 15.04.2014
(51) Int. Cl.: G02F 1/35, G02F 1/377

(54) **GENERATEUR D'AU MOINS TROIS FAISCEAUX LASER COHERENTS DANS LE DOMAINE DE L'INFRAROUGE ET DU VISIBLE**
GENERATOR VON MINDESTENS DREI KOHÄRENTEN LASERSTRAHLEN IM INFRAROT- UND SICHTBAREN BEREICH
GENERATOR OF AT LEAST THREE COHERENT LASER BEAMS IN THE INFRARED AND VISIBLE DOMAIN

(30) Priorité: 19.04.2013 FR 1300934
(43) Date de publication de la demande: 24.02.2016
(73) Titulaire: Centre National de la Recherche Scientifique (C.N.R.S.), 75794 Paris Cedex 16 (FR); Observatoire de Paris, 75014 Paris (FR)
(72) Inventeur: ACEF, Mohand Ouali, 75013 Paris (FR); DU BURCK, Frédéric, 60180 Nogent sur Oise (FR); DIMARCQ, Noël, 91150 Etampes (FR)
(74) Mandataire: Priori, Enrico
(86) Numéro de dépôt international: PCT/EP2014/057633
(87) Numéro de publication internationale: WO 2014/170331

(56) Documents cités:
- US-A1- 2006 198 402
- US-A1- 2008 240 177
- US-A1- 2008 285 606
- US-A1- 2010 150 183
- US-B1- 7 489 437
- B. ARGENCE ET AL: "Molecular laser stabilization at low frequencies for the LISA mission", PHYSICAL REVIEW D, vol. 81, no. 8, 1 avril 2010 (2010-04-01), XP055092059, ISSN: 1550-7998, DOI: 10.1103/PhysRevD.81.082002
- DANIAULT L ET AL: "Coherent beam combining of two femtosecond fiber chirped-pulse amplifiers", OPTICS LETTERS, OPTICAL SOCIETY OF AMERICA, vol. 36, no. 5, 1 March 2011 (2011-03-01), pages 621-623, XP001560608, ISSN: 0146-9592, DOI: 10.1364/OL.36.000621 [retrieved on 2011-02-18]

## Description

### Domaine technique de l'invention

La présente invention concerne un générateur de faisceaux laser cohérents infrarouge et visible à forte puissance et une méthode de génération de tels faisceaux. Elle s'applique notamment à la génération de faisceaux optiques pour la télémétrie laser et pour les télécommunications optiques.

### Etat de l'art

Le volume sans cesse croissant des communications et transfert d'informations par fibres optiques (augmentation de plus 70 % par an, ces 30 dernières années), nécessite la mise en place de canaux dédiés, de plus en plus nombreux au voisinage de 1.5 µm. La bande conventionnelle C (qui couvre le domaine 1530 nm - 1565 nm) est principalement utilisée du fait de la faible absorption que présentent les fibres optiques en silice, monomodes dans cette région spectrale.

Les canaux de communications fixés par une réglementation internationale, et utilisés pour les communications optiques sont séparés par des largeurs spectrales qui n'ont ainsi cessé de diminuer ces 30 dernières années. Au début des années 90, on utilisait à peine quelques longueurs d'onde couplées en même temps dans une même fibre optique avec des systèmes commerciaux de type CDWM (Coarse Wavelength-Division Multiplexing). Les canaux utilisés étaient séparés de l'ordre de 20 nm. L'augmentation exponentielle des volumes d'informations transférés par le biais de fibres optiques a amené à réduire de plus en plus les distances séparant les canaux utilisés, de façon à augmenter leur nombre. On parle aujourd'hui de systèmes DWDM (Dense Wavelength-division Multiplexing) qui utilisent des espacements entre les canaux, dans lesquels se propagent les longueurs d'onde, qui vont de 0,8 nm (100 GHz), à 0,1 nm (12.5 GHz), rendant possible la combinaison de près de 160 longueurs d'onde optiques dans un même canal de communication (normes ITU-T G.692& G 694.1). Parallèlement, on parle déjà de systèmes « Ultra DWDM » de demain, avec plusieurs centaines de longueurs d'onde utilisables en même temps, dans un même canal.

L'augmentation du nombre de canaux de communications repose sur deux stratégies. Une première stratégie est l'extension à d'autres régions spectrales, et donc le développement de nouveaux outils technologiques (fibres optiques dopées, amplificateurs optiques..). Cette approche implique à la fois un coût élevé et une nécessité d'amplifier les signaux plus souvent au cours d'une communication très longue distance, du fait de l'absorption importante des fibres optiques hors de la bande C. Une deuxième stratégie est le rétrécissement plus important des espacements entre les canaux utilisés dans la bande C. Pour éviter un chevauchement (brouillage) des canaux, on cherche à utiliser des lasers infrarouges (IR) dont la stabilité de fréquence (court et long terme) est accrue de façon significative, permettant ainsi de démultiplier les canaux de transfert de données.

Les lasers émettant dans la bande C du domaine des télécommunications en régime continu (CW mode), possèdent une grande pureté spectrale intrinsèque. Pour accroitre la stabilité de fréquence à court et/ou à long terme, et augmenter ainsi la longueur de cohérence, il est nécessaire d'utiliser un discriminant de fréquence « extérieur » qui permettra de rétroagir sur un paramètre du laser qui gouverne la fréquence d'émission laser. De nombreuses solutions sont envisagées et/ou d'ores et déjà utilisées. L'utilisation de cavités optiques rigides et ultrastables donne des résultats remarquables et inégalés en terme de stabilité de fréquence, à court terme (gamme de 10⁻¹⁵ voire de 10⁻¹⁶ en valeurs relatives, pour des temps d'intégration compris entre 1 s et 100 s typiquement). Cette méthode demeure néanmoins confinée à des applications de laboratoire, car elle nécessite une stabilisation rigoureuse de la longueur optique très sensible à l'environnement thermique et mécanique de la cavité. Une autre solution consiste à comparer la fréquence du laser IR à un battement de fréquence issu d'un interféromètre de type Michelson, réalisé avec deux fibres optiques constituant les deux bras de l'interféromètre, l'un très court (< 1 m), l'autre plus long (∼km). Les instabilités résiduelles de fréquence atteintes par cette solution sont dans la gamme de 10⁻¹⁴ en valeur relative, pour des temps d'intégration compris entre 1 ms et 1 s. Cependant, comme dans le cas précédent, une isolation sismique (table anti-vibration) et un environnement thermique et phonique sévères sont requis. Une troisième solution consiste à utiliser des raies d'absorption atomiques ou moléculaires dans l'IR ou le rouge pour la stabilisation en fréquence du laser IR.

L'utilisation de raies d'absorption moléculaires IR, pour stabiliser la fréquence d'émission des lasers IR est la méthode la plus couramment (et anciennement) utilisée, notamment dans le cas de dispositifs compacts et transportables. Celles-ci sont nombreuses dans l'infrarouge (monoxyde de carbone CO, acétylène C2H2, cyanure d'hydrogène HCN, ....), mais présentent malheureusement soit un coefficient d'absorption faible, soit un facteur de qualité médiocre, voire les deux en même temps. Le facteur de qualité (Q) d'une raie d'absorption est défini comme le rapport entre sa fréquence centrale (F) et sa largeur à mi-hauteur (ΔF). Le facteur de qualité Q = F/ ΔF détermine directement la stabilité de fréquence à court terme du laser asservi, l'instabilité de fréquence résiduelle du laser asservi étant proportionnelle à 1/ (Q x S/B), où S/B est le Rapport signal à bruit de la raie détectée. Une publication récente (J. Hald et al., "Fiber laser optical frequency standard at 1.54 µm", OPTICS EXPRESS, Vol. 19, No. 3 / January 2011) fait état d'une stabilisation de 5x10⁻¹³ @ 1s avec un laser fibré opérant à 1542 nm asservi sur une raie de 13C2H2. Cependant, le dispositif expérimental retenu, peu compatible avec une utilisation transportable, privilégie la stabilité de fréquence à court terme au détriment de la stabilité à long terme. Par ailleurs, ce niveau de performance est restreint à la longueur d'onde de 1542 nm utilisée et ne peut être réalisé dans toute la bande conventionnelle C.

Une autre approche pour la stabilisation de fréquence de lasers IR est l'utilisation de leur fréquence double pour utiliser les raies d'absorption de quelques alcalins dans le visible : rubidium Rb (raie à 1 photon @ 780 nm, à 2-photons @ 778nm), césium Cs (@ 852 nm), potassium K(@767 nm), etc. Une version commerciale d'un laser à 1556 nm, stabilisé en utilisant une transition à 2-photons de l'atome de Rubidium à 778 nm, développée par une société canadienne pour le projet ALMA (Atacama Large Millimeter Array) présente ainsi des performances équivalentes à celles réalisées dans un environnement de type laboratoire avec les raies de C2H2 à 1.5 µm (voir par exemple J. F. Cliche et al., "Turnkey compact frequency standard at 1556 nm based on Rb two-photon transitions," Conférence on Precision Electromagnetic Measurements (CPEM), Digest, 674-675 (2004)).

Ces publications montrent que l'utilisation des raies d'absorption situées dans l'IR ou le rouge, en utilisant la fréquence fondamentale des lasers IR ou son harmonique deux, conduit à des performances limitées en stabilité de fréquence. La stabilisation en fréquence de ces mêmes lasers IR est par ailleurs limitée à quelques longueurs d'ondes déterminées par l'existence de raies d'absorption et de ce fait n'est pas optimale notamment pour les applications aux télécommunications optiques.

Certaines publications ont fait valoir l'intérêt d'une stabilisation basée sur les raies de l'iode (I2) dans le vert, en utilisant la génération de 3^{ème} harmonique du laser IR. La molécule d'iode présente en effet une forte bande d'absorption dans la gamme spectrale qui s'étend de 500 à 750 nm. Ainsi, l'article de M. Marangoni et al. ("Simultaneously phase-matched second- and third harmonie generation from 1.55 µm radiation in annealed proton-exchanged periodically poled lithium niobate waveguides", Opt. Lett. Vol. 31, No. 18 (2006)), décrit une méthode permettant de générer l'harmonique 3 d'un laser opérant à 1.5µm, en utilisant un même cristal pour réaliser à la fois le doublage et la somme de fréquences. Une puissance de 34 nanoWatt a été obtenue à 523 nm avec une structure diélectrique en niobate de lithium de type structre guide d'onde polarisée périodiquement par échange protonique (ou (APE)PPLN pour (« annealed proton exchanged periodically poled niobate lithium ») en utilisant une puissance laser de 16 mW à 1570 nm. Ces niveaux de puissance dans la gamme des nano-Watts ne permettent cependant pas de saturer les raies de l'iode pour réaliser un asservissement de fréquence effectif, le niveau de puissance requis pour sonder les transitions de l'iode étant supérieur à 1 mW. Le document US2010/0150183 montre un dispositif de génération de troisième harmonique obtenu en deux étages, le premier étage générant un second harmonique, le second étage délivrant le troisième harmonique.

Un objet de l'invention est de proposer un générateur de faisceaux laser infrarouge et visible, cohérents en phase et de forte puissance optique (typiquement supérieure à plusieurs dizaines de mW dans le vert et supérieure à une centaine de mW dans chacun des faisceaux rouge ou infrarouge disponibles simultanément). Un tel générateur pourra permettre par exemple la stabilisation en fréquence d'un laser IR opérant sur l'ensemble des bandes C, L, voire même partiellement S, des télécommunications optiques sur les raies ultrafines de l'iode moléculaire. Il pourra également être appliqué dans le domaine de la biologie ainsi qu'à des fins de télémétrie laser dans laquelle l'utilisation de trois radiations cohérentes permet de s'affranchir de la connaissance des conditions de propagation dans l'atmosphère.

### RESUME DE L'INVENTION

Selon un premier aspect, l'invention concerne un générateur d'au moins trois faisceaux laser cohérents selon la revendication 1.

De façon connue, des faisceaux laser cohérents sont des faisceaux laser présentant une relation de phase fixe entre eux.

Les déposants ont montré qu'un tel générateur permettait grâce à l'agencement particulier des composants, d'obtenir des puissances optiques inégalées pour les trois faisceaux cohérents dans le domaine de l' infrarouge et du visible, (par exemple rouge et vert), et ce dans une large bande spectrale. Selon une variante, le générateur de faisceaux laser comprend en outre des moyens de stabilisation de la fréquence d'émission de la source élémentaire sur une raie d'absorption de l'iode moléculaire, en utilisant le troisième faisceau laser généré à la troisième longueur d'onde. On obtient alors en sortie du générateur, trois faisceaux ultrastables en fréquence, dont les applications sont nombreuses. Du fait de la grande densité de raies d'absorption de l'iode moléculaire dans le visible, la stabilité des faisceaux peut être obtenue sur une large bande spectrale, couvrant notamment dans l'infrarouge, les bandes C, L et une partie de la bande S des télécommunications optiques, en fonction des sources élémentaires disponibles.

Selon une variante, le générateur de faisceaux laser comprend en outre des moyens de contrôle de la puissance optique du faisceau à la première longueur d'onde, en entrée du cristal non linéaire générateur de somme de fréquences, en utilisant le troisième faisceau laser généré à la troisième longueur d'onde. Cette boucle de contrôle de la puissance optique en entrée du cristal générateur de somme de fréquences permet notamment une optimisation en temps réel des paramètres de couplage et une optimisation du fonctionnement du cristal.

Selon une variante, le générateur de faisceaux laser comprend en outre un amplificateur optique pour l'amplification du premier faisceau laser à la première longueur d'onde. L'amplificateur optique, large bande spectrale, permet d'obtenir en entrée du cristal doubleur la puissance requise, et ce pour différents types des sources laser élémentaires.

Pour des gains d'encombrement et pour faciliter les réglages optiques, le générateur de faisceaux laser peut être tout ou partiellement fibré.

Selon une variante, le générateur de faisceaux laser comprend en outre des moyens de doublage de fréquence ou de génération de somme de fréquences pour obtenir, à partir d'au moins l'un des deuxième ou troisième faisceau, un quatrième faisceau laser, cohérent, à une quatrième longueur d'onde dans l'UV. On obtient alors 4 faisceaux ou plus, cohérents, de forte puissance optique, qui peuvent être stabilisés sur une raie de l'iode moléculaire.

Le générateur de faisceaux laser selon le premier aspect peut être utilisé pour la stabilisation des raies d'émission d'une source laser femtoseconde. Selon un deuxième aspect, l'invention concerne ainsi un module de stabilisation en fréquence des raies d'émission d'une source laser femtoseconde, comprenant :
- un générateur de faisceaux laser selon le premier aspect, dans lequel les faisceaux sont stabilisés sur une raie d'absorption de l'iode moléculaire;
- un premier module de battement optique (620) destiné à réaliser un battement optique entre un train d'impulsions émis par la source laser femtoseconde, filtré optiquement à une première longueur d'onde, et un premier faisceau laser de référence, généré par le générateur de faisceaux laser à une longueur d'onde sensiblement identique à celle du train d'impulsions filtré;
- un module d'asservissement de fréquence permettant le contrôle de la différence de fréquences entre les fréquences du train d'impulsions filtré et du premier faisceau laser de référence à partir du signal issu du module de battement optique.

Il est ainsi possible de stabiliser avec les raies intrinsèques de l'iode moléculaire toutes les raies émises par le laser femtoseconde et, corolairement, la différence de fréquence entre deux raies (domaine micro-onde ou térahertz).

Selon une variante, le module de stabilisation en fréquence comprend en outre:
- un deuxième module de battement optique destiné à réaliser un battement optique entre un train d'impulsions émis par la source laser femtoseconde, filtré optiquement à une deuxième longueur d'onde donnée, et un deuxième faisceau laser de référence, généré par le générateur de faisceaux laser à une deuxième longueur d'onde sensiblement identique à celle du train d'impulsions filtré,
- le module d'asservissement comprenant un mélangeur électronique permettant d'obtenir la différence entre la première différence de fréquences entre les fréquences du train d'impulsions filtré à la première longueur d'onde et du premier faisceau laser de référence et la deuxième différence de fréquences entre les fréquences du train d'impulsions filtré à la deuxième longueur d'onde et du deuxième faisceau laser de référence.

Dans ce cas, l'utilisation des radiations doublée et triplée en fréquence du générateur de faisceaux permet de stabiliser en fréquence un laser femtoseconde sans avoir besoin d'auto-référencement.

L'invention concerne ainsi, selon un troisième aspect, une source laser femtoseconde ultrastable comprenant une source laser d'émission d'impulsions femtoseconde et un module de stabilisation en fréquence des raies d'émission de la source laser d'émission d'impulsions femtoseconde selon le deuxième aspect.

Selon un quatrième aspect, l'invention concerne un procédé de génération d'au moins trois faisceaux laser selon la revendication 10.

Selon une variante, le procédé de génération de faisceaux laser comprend en outre la stabilisation de la fréquence d'émission de la source élémentaire sur une raie d'absorption de l'iode moléculaire, en utilisant le troisième faisceau généré à la troisième longueur d'onde.

Selon une variante, le procédé de génération de faisceaux laser comprend en outre le contrôle de la puissance optique du faisceau à la première longueur d'onde, en entrée du cristal non linéaire générateur de somme de fréquences, en utilisant le troisième faisceau émis à la troisième longueur d'onde.

Selon une variante, le procédé de génération de faisceaux laser comprend en outre la modulation du faisceau laser à la longueur d'onde infrarouge incident dans le cristal non linéaire générateur de somme de fréquences, en fonction d'un signal de codage. Le signal de codage peut être par exemple et non exclusivement, un signal de codage pour des télécommunications optiques. Alternativement, le procédé de génération de faisceaux laser peut comprendre la modulation du faisceau laser visible à la sortie du cristal non linéaire.

L'invention concerne également un procédé de stabilisation en fréquence des raies d'émission d'une source laser femtoseconde comprenant :
- le battement optique entre un train d'impulsions émis par la source laser femtoseconde, filtré optiquement à une première longueur d'onde, et un premier faisceau laser de référence, généré selon le procédé décrit selon le quatrième aspect, à une longueur d'onde sensiblement identique à celle du train d'impulsions filtré;
- le contrôle de la différence de fréquences entre les fréquences du train d'impulsions filtré et du premier faisceau laser de référence à partir du signal issu du module de battement optique.

Selon une variante, le procédé de stabilisation en fréquence comprend en outre :
- le battement optique entre un train d'impulsions émis par la source laser femtoseconde, filtré optiquement à une deuxième longueur d'onde, et un deuxième faisceau laser de référence, généré selon le procédé décrit selon le quatrième aspect, à une deuxième longueur d'onde sensiblement identique à celle du train d'impulsions filtré ;
- le contrôle de la différence entre la première différence de fréquences entre les fréquences du train d'impulsions filtré à la première longueur d'onde et du premier faisceau laser de référence et la deuxième différence de fréquences entre les fréquences du train d'impulsions filtré à la deuxième longueur d'onde et le deuxième faisceau laser de référence.

### BREVE DESCRIPTION DES DESSINS

D'autres avantages et caractéristiques de l'invention apparaîtront à la lecture de la description, illustrée par les figures suivantes :
- Figures 1A et 1B, deux exemples d'un générateur de faisceaux laser cohérents infrarouge et visible selon la présente description, dans un mode de propagation respectivement en espace libre et en espace fibré.
- Figure 2A, un exemple de générateur de faisceaux laser selon une variante, comprenant en outre une stabilisation en fréquence sur une raie d'absorption de l'iode moléculaire, et figure 2B, un exemple de signal émis par le module d'interrogation de l'iode pour la stabilisation en fréquence, obtenu par le laser IR triplé en fréquence selon le procédé de génération de faisceaux décrits dans la présente demande;
- Figures 3A à 3D des schémas montrant les raies d'absorption de l'iode moléculaire ;
- Figures 4A à 4C des schémas illustrant différentes variantes d'un générateur selon la présente description pour la génération de faisceaux laser cohérents infrarouge et visible, ultrastables.
- Figure 5, un schéma illustrant les plages de longueurs d'onde accessibles grâce à une méthode de génération de faisceaux cohérents et ultrastables selon la présente description ;
- Figures 6A et 6B, deux exemples de générateurs d'impulsions femtoseconde à peigne de fréquences stabilisées, mettant en oeuvre une variante d'un générateur de faisceaux infrarouge et visible selon la présente description.

### DESCRIPTION DETAILLEE

Sur les figures, les éléments identiques sont repérés par les mêmes références.

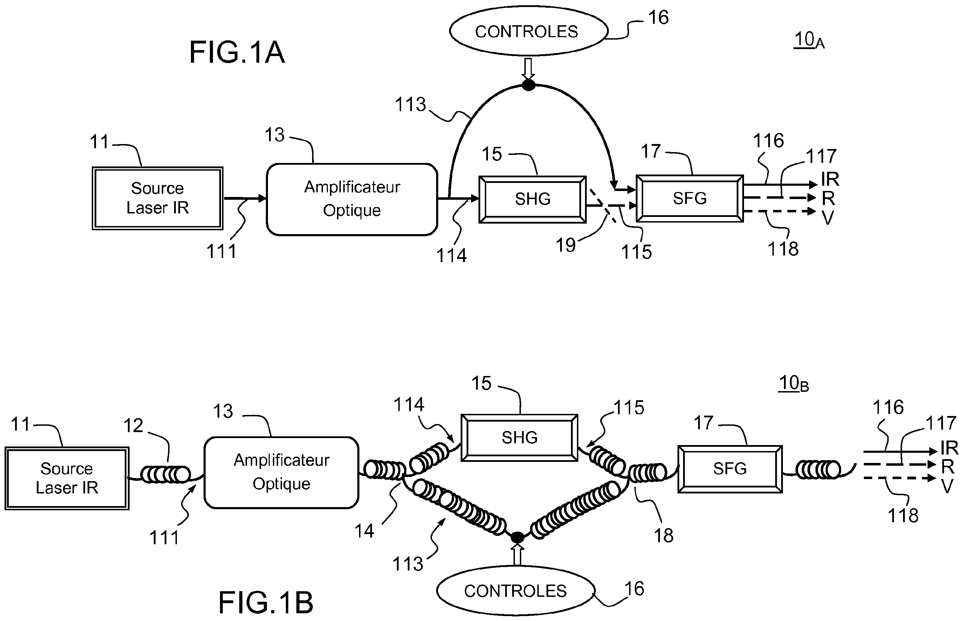

Les figures 1A et 1B illustrent selon deux variantes un générateur de faisceaux laser cohérents selon la présente invention.

Le générateur de faisceaux laser 10_{A} représenté sur la figure 1A illustre un exemple de générateur selon la présente invention fonctionnant dans un mode de propagation des faisceaux en espace libre. Il comprend une source laser infrarouge continue 11, un amplificateur optique 13, un cristal doubleur de fréquence ou SHG (pour « Second Harmonie Generation ») 15 et un cristal générateur de somme de fréquences ou SFG (pour « Sum-Frequency Generation ») 17. L'amplificateur optique, par exemple un amplificateur à fibre dopé Erbium, permet de fournir la puissance optique nécessaire lorsque la puissance d'émission de la source laser est insuffisante. L'amplificateur optique présente l'avantage d'être large bande spectrale ; un seul composant peut donc être utilisé lorsqu'on change la source laser afin de couvrir la bande C ou L des télécoms par exemple. L'amplificateur peut également être intégré dans la source. Il est également possible de s'affranchir d'un amplificateur optique si la puissance optique d'émission de la source est suffisante. La source laser infrarouge est par exemple une source d'émission laser accordable en longueurs d'onde, par exemple un laser à fibre dopée Erbium ou une diode laser. Le laser à fibre dopée Er présente généralement une accordabilité plus importante (accordabilité en longueur d'onde sur environ 1000 pm) que celle de la diode laser (environ 50 pm). La diode laser présente l'avantage de la compacité et la possibilité d'asservir via le courant d'injection, comme cela sera décrit plus en détails par la suite.

Les cristaux pour le doublage et la génération de somme de fréquences sont par exemple des cristaux en niobate de lithium (LiNbO3). D'autres cristaux peuvent être utilisés de façon connue, comme par exemple le Phosphate de Potassium Titanyl, utilisé en structure polarisé périodiquement (ou PPKTP). Selon la méthode de génération décrite dans la présente description, le faisceau laser 111 émis par la source laser infrarouge 11 et amplifié au moyen de l'amplificateur optique 13 est séparé en deux faisceaux 113 et 114, le ratio des puissances optiques sur chacune des voies pouvant être optmisé en fonction des puissances requises en aval dans le générateur. Le premier faisceau (114) est directement couplé dans le premier cristal non linéaire 15 de LiNbO3 pour générer un faisceau laser 115, harmonique 2 dans le rouge du premier faisceau 114, de longueur d'onde le 772 nm par exemple. Un filtre optique approprié 19 permet de couper la radiation IR résiduelle issue du premier cristal non linéaire 15. Le second faisceau IR (113), qui n'a pas traversé le premier cristal non linéaire 15, est superposé au faisceau 115 généré précédemment dans le rouge, les deux faisceaux 113 et 115 étant couplés dans le second cristal non linéaire 17 pour réaliser la somme de fréquences Rouge et infrarouge IR, résultant en un faisceau 118 de longueur d'onde visible, à 515 nm par exemple. Les autres faisceaux 116 et 117 issus du deuxième cristal non linéaire 17 sont les faisceaux résiduels repsectivement dans l'infrarouge et dans le rouge. Avantageusement, un module de contrôle 16 permet de contrôler des paramètres de couplage du deuxième faisceau IR 113 en vue du couplage dans le deuxième cristal non linéaire 17, ces paramètres pouvant être des paramètres géométriques, de polarisation et/ou de puissance. Un asservissement en température des cristaux non linéaires peut également être effectué pour assurer l'optimisation du fonctionnement de ces cristaux. Comme cela sera décrit par la suite, le module de contrôle peut comprendre en particulier des moyens de contrôle de la puissance optique du faisceau IR en entrée du cristal non linéaire 17 générateur de somme de fréquences, asservis sur la puissance optique de sortie dans le vert (faisceau 118). Le générateur peut également comprendre des moyens de modulation de la fréquence pour la stabilisation en fréquence du faisceau IR qui seront décrits plus en détails par la suite.

Le générateur ainsi décrit permet l'émission de trois radiations optiques cohérentes en phase (car issues du même faisceau laser infrarouge) dans la bande verte du spectre visible en même temps que dans les bandes IR et Rouge. Le déposant a déjà montré expérimentalement que le générateur de faisceaux lasers ainsi décrit permet l'émission de radiations optiques puissantes à 1541 nm et à 1544 nm, en utilisant respectivement une diode laser et un laser à fibre. Le procédé peut s'étendre dans toute ou partie des bandes conventionnelles C (entre 1530 nm et 1565 nm), L (entre 1565 nm et 1620 nm) et S (en dessous de 1530 nm) notamment du fait que des contrôles des paramètres de couplage du second faisceau IR 113 en entrée du second cristal non linéaire (générateur de somme de fréquences) sont possibles indépendamment des paramètres du premier faisceau IR 114 en entrée du premier cristal non linéaire (doubleur de fréquences). Ainsi, pour une puissance optique de 1 Watt à 1,54 µm en sortie de l'amplificateur optique 13, des puissances optiques de 30 mW et 140 mW respectivement à l'harmonique 3 (515 nm) et à l'harmonique 2 (772 nm) ont d'ores et déjà été obtenues avec des cristaux non linéaires de niobate de lithium. Dans le vert, cela correspond à une puissance 20 000 fois supérieure à celle publiée dans les articles connus de l'art antérieur. Des puissances optiques supérieures à 100 mW sont attendues dans le vert en optimisant le choix des cristaux non linéaires. Un gain d'un facteur supérieur à 60 000 est alors réalisable par rapport à l'état de l'art antérieur.

Dans l'exemple de la figure 1A, les faisceaux 116 et 117 sont les faisceaux résiduels repsectivement dans l'infrarouge et dans le rouge. De façon équivalente, afin d'obtenir des faisceaux cohérents dans l'infrarouge et dans le rouge, il est possible de prélever le faisceau 114 issu du faisceau laser 111 émis par la source laser infrarouge 11 après amplification au moyen de l'amplificateur optique 13 ainsi que de prélever le faisceau laser 115 généré par le premier cristal non linéaire 15 de LiNbO3. Dans ce cas, les faisceaux prélevés rouge et infrarouge conservent leur cohérence avec le faisceau vert V 118.Comme cela est représenté sur la figure 1B, le générateur peut être réalisé en technologie « tout fibré », permettant notamment un gain en volume du générateur et une plus grande facilité de contrôle des paramètres de couplage en entrée des cristaux non linéaires, notamment les paramètres géométriques et de polarisation. Ainsi, dans le générateur de faisceaux laser 10_{B} illustré sur la figure 1B, tout ou partie des composants peuvent être fibrés et reliés par des fibres ou connecteurs à maintien de polarisation. Notamment, le générateur comprend une source laser infrarouge 11, par exemple une diode laser, dont la sortie est fibrée, au moyen d'une fibre 12 à maintien de polarisation. Un coupleur 14 à la longueur d'onde d'émission de la source infrarouge, par exemple un coupleur 50/50 de type FC/APC à maintien de polarisation, permet la séparation du faisceau infrarouge 111 en sortie de l'amplificateur optique en deux faisceaux 113, 114. Un coupleur 18 optimisé aux longueurs d'onde rouge et infrarouge permet le couplage en entrée du deuxième cristal non linéaire 17 entre le faisceau rouge 115 issu du cristal doubleur 15 et le faisceau infrarouge 113 directement issu de la source d'émission infrarouge 11. Le coupleur 18 est par exemple un coupleur WDM à maintien de polarisation. Alternativement, en fonction des caractéristiques du cristal non linéaire utilisé, le couplage peut se faire à l'intérieur du cristal non linéaire générateur de somme de fréquences. Les cristaux non linéaires 15, 17 sont avantageusement fibrés en entrée et en sortie. Le générateur comprend une sortie fibrée ou non selon les besoins de l'utilisation. Selon une variante, la sortie, fibrée, peut être reliée à des moyens de stabilisation en fréquence, comme cela sera décrit ultérieurement. Un module de contrôle 16 dans un générateur tout fibré du type de celui décrit sur la figure 10_{B} peut permettre de contrôler la puissance optique d'entrée. Par ailleurs, des moyens de modulation de la fréquence peuvent être prévus, comme cela sera décrit par la suite. Dans un mode tout fibré du générateur selon la présente description, des volumes inférieurs à 1 ou 2 litres pourront être atteints, compatibles avec des applications industrielles et embarquées.

Dans la suite de la description, les générateurs décrits pourront fonctionner en mode de propagation en espace libre, en mode de propagation fibré, ou dans un mode mixte, sans que cela ne soit à nouveau précisé.

Une première application d'un générateur tel que décrit sur les figures 1A et 1B concerne la télémétrie laser. La mesure absolue de distance en présence de l'atmosphère exige la connaissance de nombreux paramètres atmosphériques tels que la température, la pression et l'hygrométrie. L'absence de la connaissance précise de ces paramètres est une des limitations importantes à la connaissance précise de la distance « mesurée » par un télémètre laser conventionnel. Un modèle théorique proposé dès 1994 (A. N. Golubev et al., "Three-color optical range finding", Appl. Optics, Vol. 33 N° 31, (1994)) permet de s'affranchir de cette difficulté à conditions d'utiliser trois radiations cohérentes. Le générateur de faisceaux laser décrit dans la présente demande permet la génération de ces radiations, avec des puissances optiques inégalées. Celui-ci permet ainsi de s'affranchir des conditions de propagation (humidité, pression, température de l'environnement). Une application immédiate du générateur de faisceaux laser selon la présente description, et notamment dans la variante « tout fibré » qui permet un encombrement minimal, réside ainsi dans l'amélioration des conditions de vol en formation d'aéronefs ou pour la surveillance et le suivi de grands ouvrages de travaux publics.

Une deuxième application concerne la génération de radiations cohérentes de forte puissance, ultrastables en fréquence, par exemple pour les applications dans les télécommunications optiques dans lesquelles on recherche une augmentation du nombre de canaux de communications. Dans les télécommunications optiques à très longue distance (intercontinentale), pour lesquels une longueur de cohérence maximale est requise, la génération de radiations cohérentes, de forte puissance et ultrastables en fréquence permet d'atteindre également de bien meilleures performances. La réduction des instabilités de fréquence du laser conduit à réduire la largeur de raie instantanée, et donc à augmenter la longueur de cohérence.

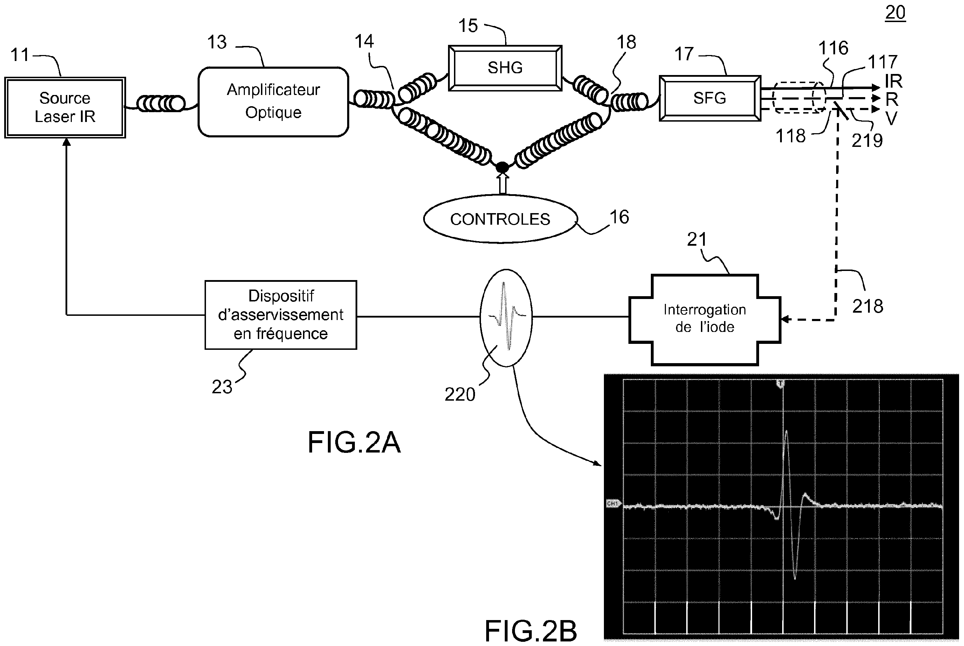

La figure 2A représente ainsi un schéma simplifié d'un générateur 20 de faisceaux laser cohérents selon une variante de la présente invention. Selon cette variante, le générateur comprend en plus des éléments déjà décrits, des moyens de stabilisation de la fréquence d'émission de la source infrarouge 11 sur une raie d'absorption de l'iode moléculaire, en utilisant une fraction 218 du faisceau 118 émis dans le vert. La puissance optique générée dans le vert (plusieurs dizaines de mW) permet en effet l'exploitation du spectre étendu des raies d'absorption de l'iode moléculaire dans toute la bande spectrale 510 nm - 521 nm, permettant ainsi de stabiliser la fréquence des radiations IR (et donc des radiations Rouge & Verte) avec des performances inégalées à ce jour pour un laser opérant dans l'infrarouge, notamment dans la bande conventionnelle C (1530 nm - 1565 nm). Plus précisément, les moyens de stabilisation comprennent un module 21 d'interrogation de l'iode et un dispositif 23 d'asservissement en fréquence pour le contrôle en fréquence de la source infrarouge 11. Le module d'interrogation de l'iode fait appel à la technique connue dite «d'absorption saturée » et décrite par exemple dans l'article de P. H. Lee et al. (« Saturated Neon absorption inside a 6328 A laser », Appl. Phys. Lett., Vol. 10, N°11, 1 june 1967). Celle-ci consiste à interroger la vapeur d'iode avec deux faisceaux contrapropageants en vue fabriquer un discriminant de fréquence de grande qualité métrologique. On génère alors un signal d'erreur 220 de symétrie impaire de faible largeur et un rapport signal à bruit important dont un exemple est illustré sur la figure 2B, qui représente le signal en tension en fonction de la fréqeunce (1 MHz/division en abscisse). Le signal d'erreur 220 est envoyé vers un dispositif 23 d'asservissement en fréquence dont des exemples seront donnés en détails par la suite. A noter que seulement quelques mW étant nécessaires pour l'interrogation de l'iode, la puissance disponible dans le faisceau vert 219 en sortie du générateur pourra rester tout à fait exploitable pour son utilisation.

Le générateur de faisceaux laser infrarouge et visible tel que décrit sur la figure 2A permet de générer à 1,54 µm une stabilité de fréquence meilleure que 10⁻¹⁴ en valeur relative, pour des temps d'intégration compris entre 1s et 1 000 s. Du fait de l'étendue spectrale de la bande d'absorption de l'iode moléculaire entre 500 et 750 nm et de l'intensité des raies (plus de 10⁶ raies hyperfines dans tout le domaine visible), une stabilité meilleure que 10⁻¹⁴ peut être attendue par exemple sur l'ensemble de la bande C conventionnelle, en utilisant les transitions de l'iode entre 510 et 521 nm. Cette possibilité est étendue à la bande L des télécommunications optiques en utilisant les transitions de l'iode entre 521 nm et 540 nm.

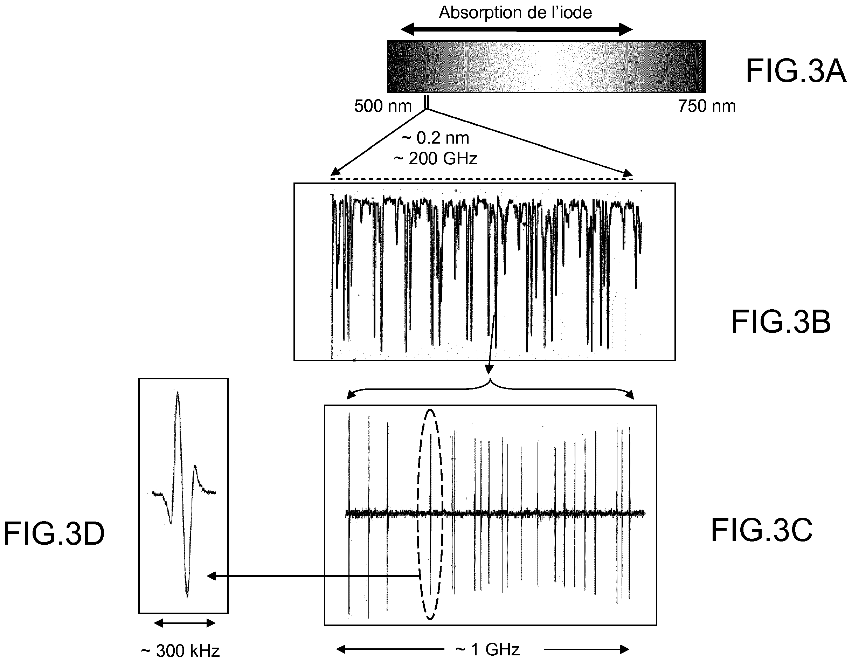

Les figures 3A à 3D représentent les raies d'absorption de l'iode entre 500 et 750 nm (figure 3A), dans une bande spectrale plus fine d'environ 0.2 nm (200 GHz) autour de 514.5 nm (figure 3B), autour de 514.5 nm sur une bande de 1 GHz environ, (figure 3C) et à 514.581 nm sur une bande de 300 kHz environ (figure 3D). L'absorption de l'iode couvre l'ensemble du spectre visible, illustré sur la figure 3A. Les raies hyperfines de l'iode sont d'autant plus étroites que l'on se rapproche de la limite de dissociation de la molécule, autour de 500 nm, mais autour de cette valeur, les intensités des raies sont plus faibles. La figure 3B illustre une portion du spectre d'absorption dans le vert, sur une plage spectrale de 0,2 nm au voisinage de 515 nm, correspondant à une bande spectrale de 200 GHz environ, et qui présente un bon compromis entre le facteur de qualité des raies de l'iode moléculaire (Q∼ 2x10⁹ à 515 nm) et la nature et la qualité intrinsèque des sources laser disponibles. Chaque raie représentée sur la figure 3B se décompose en un amas hyperfin qui s'étale sur 1 GHz environ, et dont un exemple est représenté sur la figure 3C. La figure 3D représente la transition étroite de l'iode à 514,581 nm.

Ainsi, plus de 10 000 raies d'absorption saturée de l'iode sont identifiées dans la gamme 510 nm -521 nm, constituant un véritable peigne de fréquences ultrastables susceptibles d'être utilisées pour stabiliser en fréquence n'importe quel laser opérant pour toute la bande C des télécommunications optiques (1530 nm - 1565 nm), grâce à la méthode de génération de faisceaux laser selon la présente description. Les raies de l'iode très étroites (figure 3D), sont regroupées en amas hyperfins qui se déclinent en 15 ou 21 composants s'étalant sur moins de 1 GHz (Figure 3C). Cette approche est possible aussi sur toute l'étendue de la bande L des télécommunications optiques (1565 nm - 1620 nm), et partiellement sur la bande S (1500 nm - 1530 nm). Les raies de l'iode possèdent bien entendu des intensités et des facteurs de qualité différents (facteur Q défini précédemment), et ne confèrent pas les mêmes performances quand elles sont utilisées comme discriminant de fréquence pour la stabilisation laser. Les raies de saturation de l'iode sont d'autant plus étroites que leur fréquence centrale est élevée (vers le bleu) accroissant ainsi leur facteur de qualité Q (> 10⁹ au voisinage de 515 nm). A titre d'exemple, la raie de l'iode à 633 nm utilisée pour asservir le très populaire laser He-Ne qui émet dans le rouge, possède un facteur de qualité Q= 5 x 10⁷, alors que celles à 515 nm ont un facteur Q∼ 4 x10⁹, soit un gain d'un facteur de près de 100, à rapport signal à bruit équivalent. Par ailleurs, les raies de l'iode dans le vert sont beaucoup plus intenses et plus étroites, augmentant ainsi la stabilité de fréquence à court terme.

Les lasers He-Ne stabilisés dans le rouge à 633 nm ont une stabilité de fréquence à court terme de l'ordre de 10⁻¹² à 1 s et 10⁻¹¹ pour des temps > 100 s, alors que les lasers Nd :YAG, doublés en fréquence, stabilisés sur des transitions à 532 nm ont d'ores et déjà atteint le niveau remarquable de 1.2 x 10⁻¹⁴ à 1 s, et de 2x10⁻¹⁵ pour des temps d'intégration de 200 s à 10 000 s. C'est ce niveau de performances remarquable qui est visé par le générateur de faisceaux laser infrarouge et visible, pour tout laser opérant dans la bande C conventionnelle des télécommunications optiques (1530 nm - 1565 nm), en utilisant les raies de l'iode moléculaire (510 nm - 521 nm), après triplement de la fréquence du laser IR selon la méthode décrite dans la présente demande. Le multiplexage en longueurs d'onde (WDM) fixé par la norme ITU-T G 642 en canaux de communications régulièrement espacés (50 GHz aujourd'hui) est adossé à la fréquence de transition d'une raie de l'acétylène 13C2H2 P(16) à 1543. 383 nm. Il est possible avec la méthode de génération de faisceaux laser ultrastables décrite dans la présente demande d'utiliser les transitions hyperfines de l'iode moléculaire (R 48 (42-0) et/ou R 42 (44-0) en quasi-coïncidence avec les canaux 24 et 27 respectivement) comme références potentielles de la même grille de canaux WDM actuellement en vigueur, et de continuer ainsi à utiliser toute la technologie existante, notamment en terme de lasers IR.

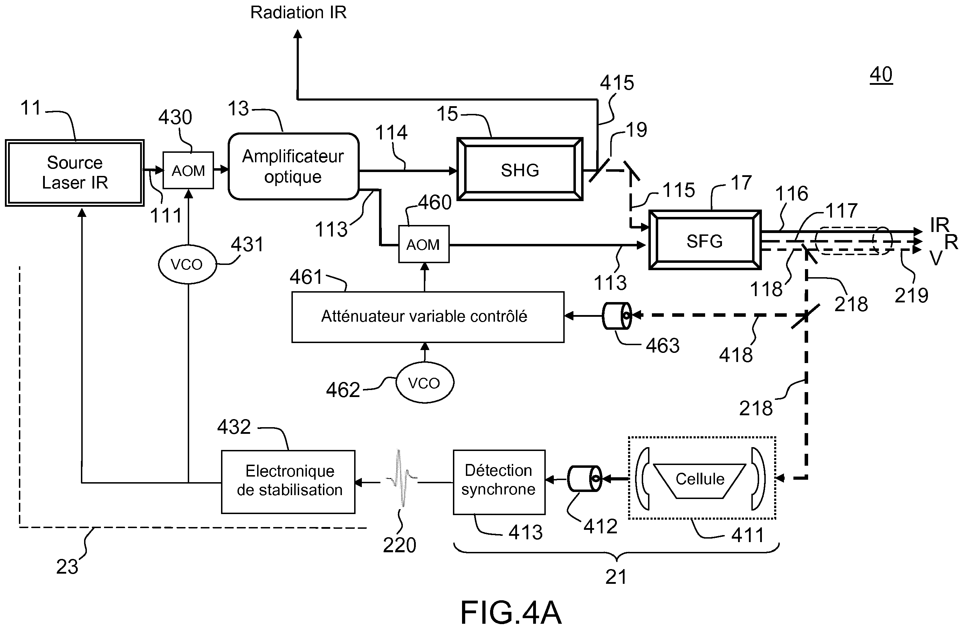

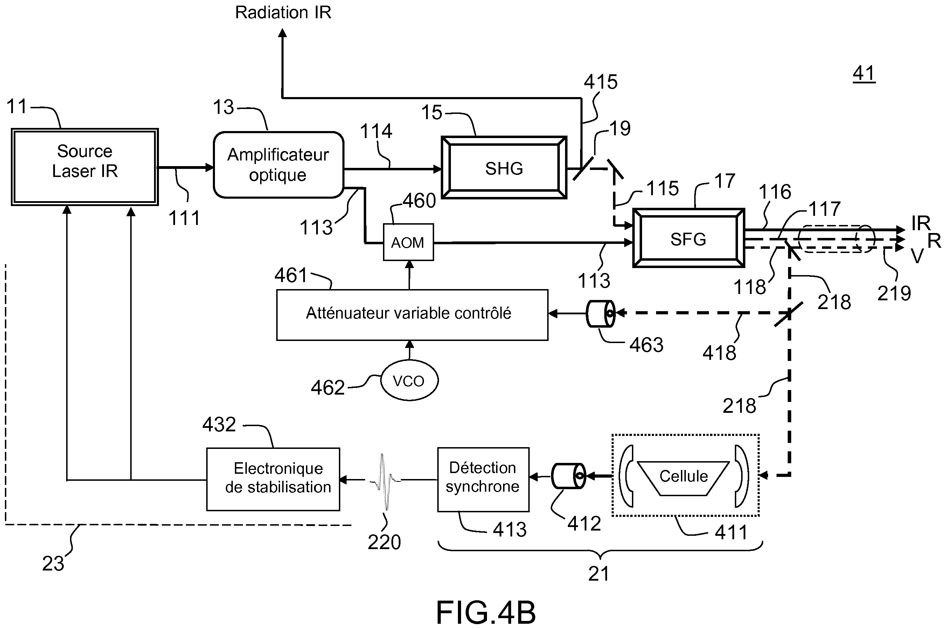

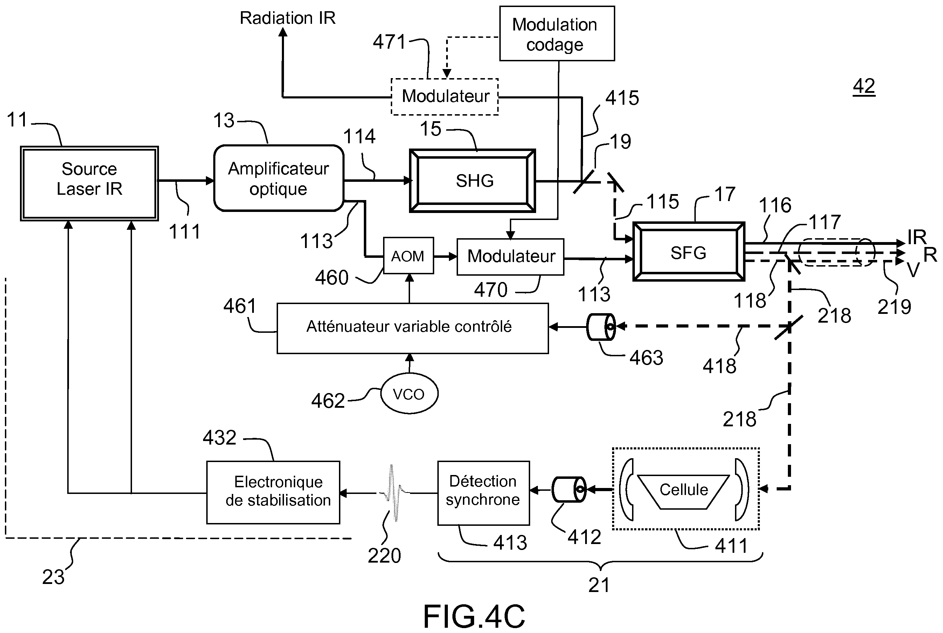

Les figures 4A, 4B et 4C illustrent par des schémas des variantes de générateurs de faisceaux laser (40 - 42) selon la présente description, pour la mise en oeuvre de méthodes de génération de faisceaux laser cohérents, ultrastables. La figure 4A illustre la stabilisation en fréquence dans le cas de l'utilisation d'une source laser infrarouge continue 11 de type laser à fibre ; La figure 4B illustre la stabilisation en fréquence dans le cas de l'utilisation d'une source laser infrarouge continue 11 de type diode laser ; La figure 4C illustre l'application d'un générateur du type de celui montré sur la figure 4B pour les télécommunications optiques.

Le générateur de faisceaux laser 40 schématisé sur la figure 4A comprend les mêmes éléments que ceux représentés sur les figures 1A, 1B ou 2. Plus précisément, dans cet exemple, la source laser infrarouge 11 est par exemple un laser commercial IR à fibre dopé Er opérant dans la bande spectrale 1530 nm - 1565 nm. Ce laser pourra être remplacé par une diode laser très compacte opérant dans la bande de longueurs d'ondes souhaitée (voir figure 4B). Ces lasers délivrent une puissance optique de 10-20 mW. La sortie du laser utilisé est par exemple fibrée, à maintien de polarisation. Le connecteur de sortie est de type FC/APC. Le générateur 40 comprend en outre un premier modulateur acousto-optique 430, également fibré à maintien de polarisation, entre le laser IR 11 et l'amplificateur optique 13, ce dernier délivrant une puissance de sortie de 1 Watt dans toute la bande 1530 nm - 1565 nm. La fréquence RF qui excite cet AOM pour générer l'onde optique diffractée à l'ordre +/- 1 (angle de Bragg), est égale à 40 MHz, par exemple. Elle est générée par un oscillateur RF 431 contrôlable en tension ou VCO pour « voltage controlled oscillator ». Ce premier modulateur acousto-optique peut avoir plusieurs fonctions. Il peut permettre d'isoler optiquement le laser IR 11 et l'amplificateur optique 13. Il peut permettre également les corrections des fluctuations de fréquences rapides du laser IR, comme décrit plus loin. La radiation IR corrigée des fluctuations de fréquence est divisée en deux parties 114, 113, par exemple à l'aide de fibres optiques à maintien de polarisation, et connecteurs FC/APC. Une première sortie de l'amplificateur est couplée au premier cristal non linéaire de Niobate de Lithium (LiNbO3) 15 fibré en entrée, afin de générer l'harmonique 2 de la fréquence IR. La seconde sortie de l'amplificateur est couplée au second cristal non linéaire 17 qui réalise la somme de fréquences pour la génération de la radiation verte. Le cristal non-linéaire 15 utilisé pour doubler la fréquence IR est du type Niobate de Lithium, en structure guide d'onde, polarisé périodiquement (PPLN). Le cristal est par exemple placé dans un four afin de le stabiliser en température, à mieux que 1 mK, à l'aide de modules à effet Peltier et une électronique dédiée (type PID, proportionnel-intégrateur-dérivateur). Ce premier cristal possède par exemple un pas de réseau optique de l'ordre de 18 µm, fonctionne à une température voisine de 50 °C. Un filtre dichroïque 19 placé en aval du cristal 15 sépare la radiation rouge générée (115) de la radiation IR fondamentale (415). Cette dernière n'est pas injectée dans le cristal sommateur de fréquences afin d'éviter de créer une modulation d'amplitude néfaste à l'harmonique 3. Par contre, elle peut être récupérée à l'aide d'un filtre dichroïque (19) pour constituer une référence de fréquence IR ultrastable 415. La totalité de la puissance harmonique 2 générée (faisceau 115) est couplée dans le second cristal pour obtenir l'harmonique 3 du laser IR. Le cristal non-linéaire 17 utilisé pour la somme de fréquences (F et 2xF) est aussi du type Niobate de Lithium, en structure guide d'onde, polarisé périodiquement (PPLN). Sa température est régulée à mieux que 1 mK, à l'aide d'un dispositif d'asservissement de type PID (proportionnel-intégrateur-dérivateur), similaire à celui utilisé pour le doublage de fréquence ci-dessus. Le cristal 17 possède par exemple un pas de réseau de l'ordre de 6 µm et fonctionne au voisinage de 19°C. Deux filtres dichroïques (non représentés) permettent de séparer spatialement les 3 radiations IR, Rouge et Verte qui constituent le peigne de fréquences ultrastables et cohérentes en phase, à la sortie du cristal 17 générateur de somme de fréquences.

Lorsque le cristal non-linéaire 17 générateur de somme de fréquences est utilisé en espace libre, un support micromécanique (non représenté sur la figure 4A) permettant un positionnement précis du cristal selon les 3 axes de l'espace par rapport aux faisceaux laser peut être utilisé. Par ailleurs, des lentilles de mise en forme (non représentées), spécifiques aux deux longueurs d'onde (traitement antireflet spécifique) peuvent être utilisées sur le trajet des deux faisceaux IR (dévié en amont du 1er cristal) et rouge transmis par le 1er cristal. Elles ont pour fonction de maximiser le recouvrement entre les deux radiations qui sont sommées dans le deuxième cristal 17. Deux lames de phases (demi-onde), non représentées, spécifiques à chaque longueur d'onde (IR et Rouge) peuvent également être utilisées sur le trajet de chacun des faisceaux pour assurer le parallélisme des deux états de polarisation IR et Rouge. La lame dichroïque 19 à la sortie du premier cristal doubleur de fréquence 15 permet de bloquer tout résidu transmis, à la fréquence fondamentale (IR), en même temps qu'elle transmet le maximum de puissance rouge (à 2xF). Une deuxième lame dichroïque, non représentée, peut ensuite être utilisée pour superposer les deux faisceaux IR et rouge dans le cristal 17 générateur de somme de fréquences. Lorsque le cristal non-linéaire 17 générateur de somme de fréquences est utilisé dans un mode de propagation fibré, un coupleur (18, figure 1B ou 2A) permet le couplage des deux faisceaux IR 113 et rouge 115 dans le cristal 17 générateur de somme de fréquences, de telle sorte que la deuxième lame dichroïque ou les optiques de mise en forme ne sont plus nécessaires. Un traitement optique adéquat peut être appliqué sur la fibre en sortie du module 115 pour bloquer la radiation fondamentale résiduelle. On peut aussi utiliser une fibre opérant dans le rouge, qui bloque alors la radiation IR, de plus grande longueur d'onde. Le coupleur est par exemple optimisé selon les caractéristiques suivantes : un premier port est une fibre à maintien de polarisation optimisée dans le rouge, par exemple à 772 nm. Des deuxième et troisième ports sont optimisés dans l'infrarouge, par exemple à 1.5 µm. Les pertes d'insertion à 772 nm (entrée-sortie du coupleur) sont de 1.2 dB au maximum. Les pertes d'insertion à 1.5 µm (entrée-sortie du coupleur) sont de 1.0 dB au maximum. Du fait du choix de fibres à maintien de polarisation, les lames de phase ne sont plus nécessaires.

Dans l'exemple de la figure 4A, un contrôle de la puissance optique du faisceau IR (113) en entrée du cristal générateur de somme de fréquences est effectué, par exemple au moyen d'un deuxième modulateur acousto-optique 460 positionné sur la voie du faisceau IR 113 non doublé, entre l'amplificateur optique 13 et le cristal 17 générateur de somme de fréquence. Pour cela, une faible fraction 418 (< 0.1 mW) du faisceau de sortie dans le vert est prélevée pour agir après détection au moyen par exemple d'une photodiode 463, sur un atténuateur électronique radio fréquence (RF) 461 commandé en courant et situé entre le modulateur acousto-optique 460 et une source radiofréquence 462 qui le commande. Le contrôle de la puissance optique du faisceau IR en entrée du cristal 17 générateur de somme de fréquences permet par exemple de compenser d'éventuelles dérives de température ou de couplage susceptibles d'altérer le fonctionnement optimal du cristal non linéaire.

Dans l'exemple de la figure 4A, une seconde partie de la puissance harmonique 3 (< 10 mW) est utilisée pour interroger la vapeur d'iode moléculaire pour fabriquer un signal de référence qui sera utilisé pour stabiliser la fréquence du laser IR. Le reste de la puissance optique (faisceau 219 colinéaire aux faisceaux IR 116 et rouge 117) est mise à la disposition de l'utilisation. Comme décrit précédemment, un module d'interrogation de l'iode 21 comprenant une cellule en quartz remplie d'iode 411, un détecteur 412 et un dispositif de détection de la raie absorbée de l'iode permet la génération d'un signal d'erreur 220 envoyé sur le dispositif 23 d'asservissement en fréquence. Plus précisément, le faisceau vert est séparé en deux composantes dites *pompe* et *sonde.* La cellule en quartz remplie d'iode 411 est disposée sur le trajet de ces deux faisceaux pompe et sonde, qui sont contra propageants. Le détecteur 412 placé en aval de cette cellule recueille le faisceau sonde transmis par la cellule, sur lequel est inscrit la modulation de fréquence qui permet de générer un harmonique impair de la raie de saturation de l'iode. Le signal électrique en sortie du détecteur 412 est comparé au signal de modulation au moyen d'une détection synchrone 413 pour élaborer un signal (impair) 220 dit de correction de fréquence. Le signal impair issu du dispositif « interrogation de l'iode » 21 est transmis à une électronique de stabilisation 432 (de type PI : proportionnel, intégrateur) pour agir sur un élément propre au laser, et qui a pour fonction de gouverner la fréquence émise (céramique piézo électrique, courant de diode, température etc ...). Dans le cas de la figure 4A (utilisation d'un laser à fibre) on agit sur un élément externe au laser (AOM1) pour asservir la fréquence du laser (correction rapide des fluctuations). Ainsi, le signal de correction de fréquence 220 est utilisé pour corriger les fluctuations rapides de fréquence du laser IR via le modulateur acousto-optique 430 placé entre le laser IR 11 et l'amplificateur optique 13. On asservit dans ce cas la fréquence de l'oscillateur RF 431 qui commande le modulateur acousto-optique 430 et qui détermine in-fine la stabilité de la fréquence du laser IR. Un second signal (issu d'une deuxième intégration du signal précédent) peut être utilisé pour compenser les fluctuations plus lentes de fréquence (dérive) en agissant sur la céramique piézoélectrique du laser si celui-ci est du type laser à fibre (ou sa température). Si on utilise une diode laser comme source IR, on agit respectivement sur le courant d'injection et la température de la diode laser.

Avec le générateur représenté sur la figure 4A, il est ainsi possible d'obtenir la puissance harmonique maximale à 2xF, et à 3xF, dans les limites admises par le constructeur en terme de puissance IR incidente à l'entrée des cristaux non linéaires ; d'optimiser la forme spatiale du faisceau optique IR de façon à maximiser le recouvrement avec le faisceau rouge, dans le second cristal, d'ajuster l'état de polarisation des faisceaux rouge et IR qui doivent être identiques, d'optimiser de façon indépendante les puissances IR (à F) et rouge (à 2xF) pour maximiser la puissance à la fréquence triple (3xF) ; d'utiliser en amont du cristal générateur de somme de fréquences des optiques spécifiques à chacune des longueurs d'onde IR et rouge, pour compenser (minimiser) la dispersion chromatique induite par l'indice élevé du cristal sommateur, et différent pour les deux longueurs d'onde. Dans le cas mode fibré, les faisceaux optiques sont naturellement adaptés quand ils voyagent dans la même fibre et la polarisation est conservée grâce à l'utilisation de fibres à maintien de polarisation. Les puissances IR et R sont régulées par des AOM spécifiques fibrés placés sur les bras correspondants.

Le générateur de faisceaux laser 41 schématisé sur la figure 4B est sensiblement similaire à celui représenté sur la figure 4A mais ne comprend qu'un seul modulateur acousto-optique 460 pour la régulation de la puissance du faisceau IR en entrée du cristal non linéaire 17 générateur de somme de fréquences. Dans cet exemple en effet, la source laser IR 11 est par exemple une diode laser. Une correction des fluctuations rapides de fréquence est alors possible en agissant directement sur le courant d'injection de la diode. Le modulateur acousto-optique 430 représenté sur la figure 4A peut être supprimé. La correction des fluctuations lentes est appliquée sur la température de la diode. Le générateur 41 présente l'avantage d'être plus compact.

La figure 4C illustre une application du générateur représenté sur la figure 4B aux applications de télécommunications. Selon une variante, lorsqu'on souhaite superposer un code/une modulation sur la fréquence ou l'amplitude du faisceau à 1,5 µm, on peut insérer un modulateur supplémentaire 470 entre l'AOM 460 et le cristal générateur de somme de fréquences 17. Cette modulation affectera les faisceaux IR et vert, mais pas le faisceau rouge. Dans le cas d'une modulation en fréquence, celle-ci, pour être compatible avec la stabilisation sur la raie de l'iode, devra être nettement supérieure à celle utilisée pour les besoins de l'asservissement de la fréquence de la source sur la raie de l'iode. Si on souhaite découpler les 2 fonctions (stabilisation sur l'iode et codage) le modulateur peut être inséré à la sortie du générateur de faisceaux sur la voie IR résiduelle 116 ou 415, comme cela est illustré avec le modulateur 471 représenté en pointillés sur la figure 4C. Dans ce dernier cas, les fonctions « générateur de fréquences ultrastables » et « dispositif de codage/modulation transfert d'informations » sont découplées. Alternativement, le modulateur peut être inséré à la sortie du générateur de faisceaux sur la voie du faisceau vert V 118.

D'autres applications sont envisageables pour le générateur de faisceaux laser cohérents, à forte puissance optique, selon la présente description.

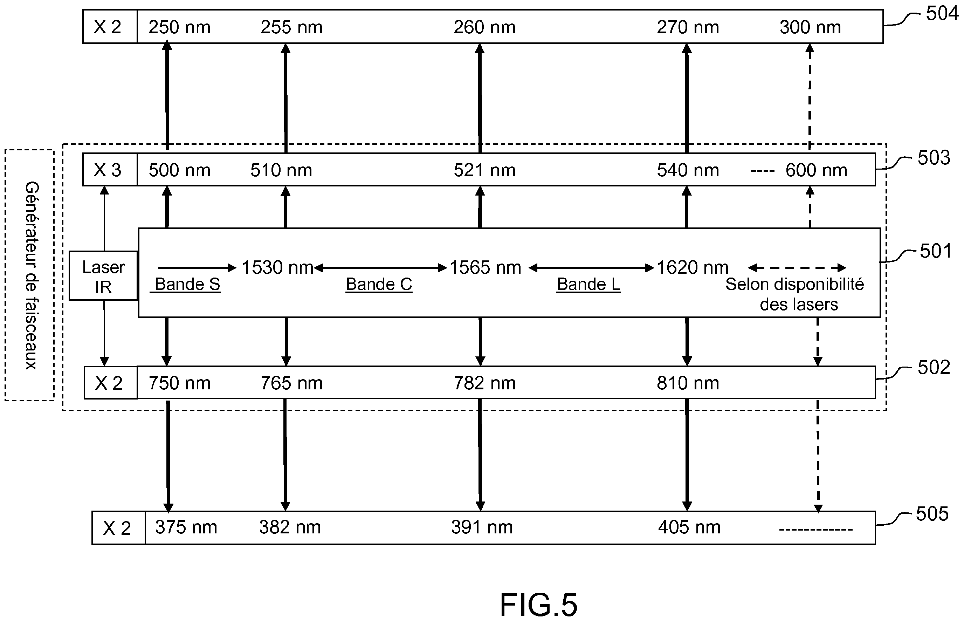

Par exemple, le générateur de faisceaux laser cohérents peut comprendre en outre des moyens de doublage du faisceau rouge et/ou du faisceau vert, et/ou des moyens de sommation de fréquence des faisceaux rouge et vert pour émettre un quatrième faisceau dans l'UV, cohérent avec les autres faisceaux générés. La figure 5 illustre ainsi respectivement des exemples de bandes de longueurs d'onde 501 de la radiation infrarouge, 502 et 503 des radiations rouge et verte obtenues par doublage et somme de fréquences selon la méthode de génération décrite dans la présente description, 504 et 505 des radiations UV obtenues par doublage respectivement des radiations verte et rouge. Comme expliqué précédemment, la disponibilité des raies de l'iode entre 500 nm et 600 nm permet grâce à la méthode décrite dans la présente demande et en fonction de la disponibilité des sources laser infrarouge, de générer des radiations cohérentes, ultrastables, dans une partie de la bande S ainsi que dans les bandes C et L, voire au-delà, pour la radiation infrarouge. Par doublage de fréquence, il est ensuite possible de générer des radiations cohérentes dans l'UV, typiquement dans les deux bandes [250 nm - 270nm] et [375 nm - 405 nm], en partant de lasers opérant dans les bandes S, C ou L des télécommunications optiques. Par sommation des fréquences données en 503 et 502 (figure 5), il est possible de générer les transitions de l'UV situées dans la bande [300 nm - 324 nm]. Les 3 bandes rapportées ci-dessus dans l'UV sont celles qui correspondent à des domaines de longueurs d'onde raccordables aux raies de l'iode localisées dans la région spectrale 500 nm - 540 nm.

Le générateur de faisceaux laser décrit dans la présente demande peut également être utilisé pour la stabilisation en fréquence des lasers femtoseconde. Une technique dite « d'auto référencement » est généralement utilisée pour stabiliser la position globale du peigne de fréquences d'un laser femtoseconde (FS). Le doublage de la fréquence d'une raie émise par le FS à l'extrémité basse fréquence du spectre permet de comparer la fréquence harmonique à la même fréquence émise à l'autre extrémité (haute fréquence) du même spectre. On produit alors un signal de correction qui permet de stabiliser la position globale du spectre. Ceci est obtenu en rétroagissant sur le courant de pompe du laser FS. Cependant, la technique d'auto référencement décrite précédemment ne permet pas de connaitre la fréquence absolue de chacune des dents qui compose le peigne de fréquences (absence d'exactitude). Par ailleurs, la puissance optique émise par chacune des raies émises par le laser FS est très faible, typiquement inférieure à 1 µWatt.

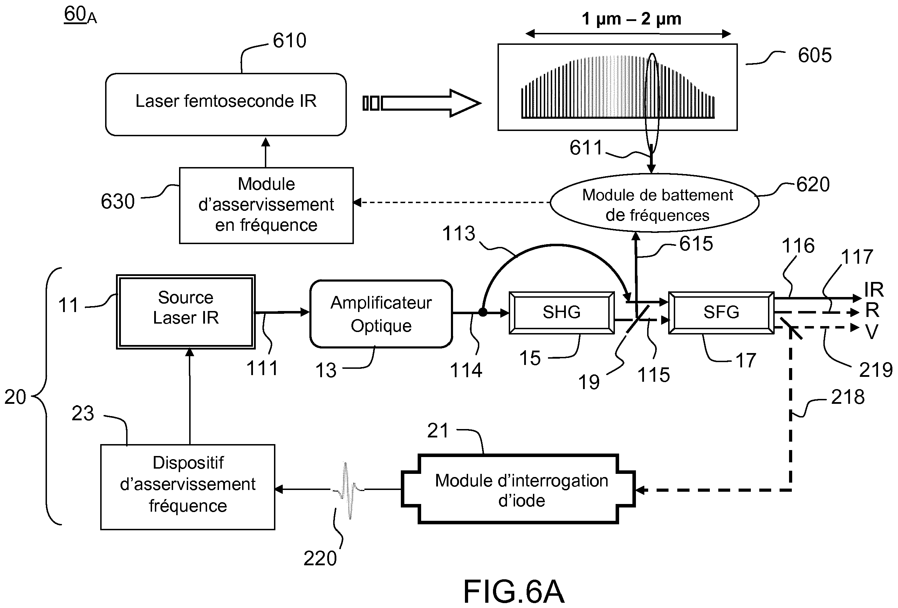

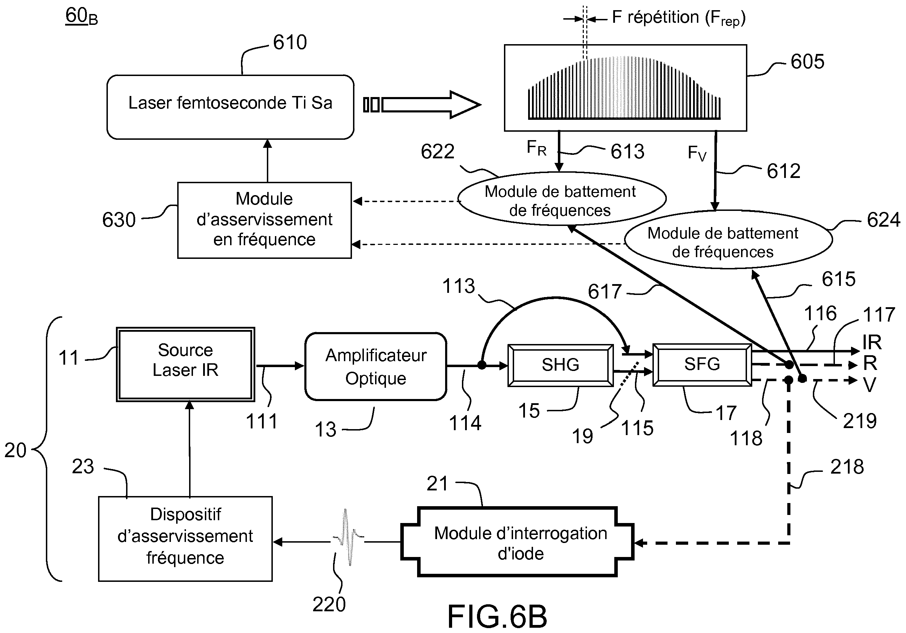

Les figures 6A et 6B illustrent deux exemples de générateurs d'impulsions femtoseconde (respectivement 60_{A} et 60_{B}) à peignes de fréquences ultrastables, mettant en oeuvre un générateur de faisceaux cohérents infrarouge et visible décrit dans la présente description.

L'exemple montré sur la figure 6A illustre un premier exemple de générateur d'impulsions 60_{A} comprenant une source d'émission femtoseconde 610 de type laser fibré Erbium, émettant des impulsions de bande spectrale comprise entre 1 et 2 µm (spectre 605). Dans l'exemple de la figure 6B, la source d'émission femtoseconde est une source dans le visible, par exemple une source laser Ti : Sa. Dans chacun des exemples, le générateur d'impulsions comprend un générateur 20 de faisceaux cohérents, continus, infrarouge et visible, tel que décrit par exemple sur la figure 2A. Le générateur de faisceaux cohérents continus permet de fournir une référence de fréquence ultrastable permettant de s'affranchir de la dérive en fréquence du laser femtoseconde, tout en lui conférant une exactitude. Pour cela, le générateur d'impulsions femtoseconde comprend un module de stabilisation utilisant les faisceaux continus ultrastables générés par le générateur de faisceaux continus.

Dans l'exemple de la figure 6A, le module de stabilisation comprend un module de battement optique 620, apte à réaliser un battement entre un train d'impulsions 611 émis par la source laser femtoseconde et résultant d'un filtrage optique à une longueur d'onde donnée, et un faisceau infrarouge 615, prélevé par exemple en sortie du cristal doubleur 15, formant un premier faisceau laser de référence, préalablement stabilisé sur l'iode. Le filtrage optique permet d'isoler la composante fréquentielle (ou mode) du train d'impulsions la plus proche en fréquence de la radiation issue du générateur. Typiquement, deux composantes fréquentielles adjacentes du peigne de fréquence (correspondant au taux de répétition du laser femtoseconde) sont séparées de quelques centaines de MHz (Fᵣₑₚ, spectre 605) pour un laser femtoseconde dans l'IR (type Er) à quelques GHZ pour les lasers femtoseconde dans le visible (type TiSa). Le filtrage optique permet ainsi de réduire le nombre de composantes optiques qui arrivent sur la photodiode (module 620), seule la composante fréquentielle la plus proche de la fréquence du générateur étant utilisée pour les besoins de l'asservissement. Le signal issu du module de battement optique est un signal électrique modulé à la fréquence différence entre les deux composantes fréquentielles (issues respectivement du générateur et du laser femtoseconde), typiquement de l'ordre de quelques centaines de MHz à quelques GHz. Plus précisément, le module de battement optique comprend une photodiode rapide (non représentée sur la figure 6A) sur laquelle sont focalisés via une lentille adaptée les faisceaux 611 et 615 pour former des interférences. La photodiode est par exemple un détecteur du type AsGa (arsenic de galium) si les radiations sont situées dans le domaine IR. Les taux de répétition des lasers femtoseconde varient de quelques dizaines de MHz à quelque GHz selon les modèles ou fabricants ; des photodiodes ayant une bande passante de quelques GHz pourront donc être utilisées. La photodiode rapide permet de détecter un signal de battement qui est envoyé vers un module 630 d'asservissement en fréquence. Le module d'asservissement permet le contrôle de la différence de fréquences entre la fréquence (ou le mode) filtré et le faisceau laser de référence à partir du signal issu du module optique de battement de fréquences. Dans le cas de l'exemple de la figure 6A, un seul faisceau continu ultrastable est disponible dans l'infrarouge et on peut continuer à utiliser l'auto-référencement du laser 610 pour la stabilisation de l'ensemble du peigne de fréquences émis par le laser femtoseconde. Ainsi, toutes les raies émises par le laser femtoseconde et corolairement la différence de fréquences entre deux raies quelconques émises par ce laser sont stabilisées avec les performances intrinsèques des raies de l'iode. L'intérêt de cette approche réside donc dans la possibilité de générer des différences de fréquence ultrastables aussi bien dans le domaine µ-onde que dans le domaine THz. De cette façon, si on compare par exemple la fréquence d'un laser puissant émettant dans le domaine THz (diodes à cascade quantiques par exemple) avec le signal optique issu de la différence de fréquences entre deux raies du laser femtoseconde, on peut conférer à la diode à cascade quantique la stabilité de fréquence issue des qualités des raies de l'iode via le laser femtoseconde. Cette approche peut permettre aussi de stabiliser en même temps plusieurs lasers à cascade quantique (opérant à différentes longueurs d'onde dans le domaine THz), sur la même référence de l'iode, via le même laser femtoseconde.

L'exemple 6B montre un autre exemple de réalisation d'un générateur d'impulsions femtoseconde ultrastables 60B dans le visible et comprenant par exemple une source d'émission femtoseconde 610 de type Titane-Saphir, émettant des impulsions de bande spectrale comprise par exemple entre 515 nm et 772 nm (spectre 605). Dans ce cas, l'utilisation des radiations doublée en fréquence (117) et triplée (219) du générateur de faisceaux cohérents 20 permet de stabiliser le laser femtoseconde de type Ti :Sa sans avoir besoin d'élargir nécessairement le spectre émis sur une octave. En effet, le battement optique entre chacune de ces deux radiations et des trains d'impulsions émis par le laser femtoseconde respectivement à chacune des fréquences permet de stabiliser totalement le spectre émis. Plus précisément, le module de stabilisation peut comprendre dans cet exemple deux modules de battement optiques 622 et 624 aptes à générer un battement optique entre un premier train d'impulsions 613 résultant d'un filtrage optique dans le rouge et le faisceau continu 617 prélevé sur le faisceau 117 en sortie du générateur de faisceaux continus d'une part, et un battement optique entre un deuxième train d'impulsions 612 résultant d'un filtrage optique dans le vert et le faisceau continu 615 prélevé sur le faisceau 219 en sortie du générateur de faisceaux continus d'autre part. Chaque module de battement optique comprend par exemple une photodiode rapide, par exemple un détecteur de type Si (silicium). Dans cet exemple, le module d'asservissement en fréquence 630 comprend un mélangeur électronique réalisant le battement électrique entre les signaux électriques de battement issus des deux modules de battement. Le module d'asservissement permet de maintenir constante la fréquence du signal issu du battement électrique pour la stabilisation de la source femtoseconde.

Bien que décrite à travers un certain nombre d'exemples de réalisation détaillés, le procédé et le dispositif d'émission laser selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Générateur d'au moins trois faisceaux laser continus et cohérents en phase respectivement à une première longueur d'onde dans le domaine de l'infrarouge, une deuxième et une troisième longueur d'onde dont au moins une dans le domaine du visible, le générateur comprenant :
- une source élémentaire (11) configurée pour émettre un faisceau laser continuà la première longueur d'onde infrarouge;
- un amplificateur optique (13) configuré pour amplifier le faisceau laser continu à la première longueur d'onde ;
- un séparateur de faisceau permettant, à partir du faisceau laser amplifié, de former un premier faisceau laser continu à la première longueur d'onde (114) et un deuxième faisceau laser continu à la première longueur d'onde (113), lesdits premier et deuxième faisceaux laser continus à la première longueur d'onde étant cohérents en phase;
- un cristal non linéaire doubleur de fréquence (15), configuré pour générer, à partir du premier faisceau laser continu à la première longueur d'onde (114), un faisceau laser continu à la deuxième longueur d'onde (115) cohérent en phase avec le premier faisceau laser continu à la première longueur d'onde (114) et donc avec le deuxième faisceau laser continu à la première longueur d'onde (113), le premier faisceau laser continu à la première longueur d'onde étant directement couplé dans le cristal non linéaire doubleur de fréquence, ;
- un cristal non linéaire générateur de somme de fréquences (17), configuré pour générer, à partir du deuxième faisceau laser continu à la première longueur d'onde (113) et du faisceau laser continu à la deuxième longueur d'onde (115) cohérents en phase, un faisceau laser continu à la troisième longueur d'onde (118) cohérent en phase avec le deuxième faisceau laser continu à la première longueur d'onde (113) et avec le faisceau laser continu à la deuxième longueur d'onde (115),
les trois faisceaux lasers générés continus et cohérents en phase respectivement à la première, deuxième et troisième longueur d'onde étant tous trois issus du faisceau laser amplifié provenant de la source élémentaire (11), et comprenant respectivement :
- la partie résiduelle (116) du deuxième faisceau laser continu à la première longueur d'onde en sortie du cristal non linéaire générateur de somme de fréquence ou un faisceau prélevé en sortie de l'amplificateur optique (13),
- la partie résiduelle (117) du faisceau laser continu à la deuxième longueur d'onde en sorite du cristal non linéaire générateur de somme de fréquence ou un faisceau prélevé en sortie du cristal non linéaire doubleur de fréquence (15),
- le faisceau laser continu à la troisième longueur d'onde (118).

2. Générateur de faisceaux laser selon la revendication 1, comprenant en outre des moyens de stabilisation de la fréquence d'émission de la source élémentaire sur une raie d'absorption de l'iode moléculaire, en utilisant le troisième faisceau laser généré à la troisième longueur d'onde.

3. Générateur de faisceaux laser selon l'une quelconque des revendications précédentes, comprenant en outre des moyens de contrôle de la puissance optique du faisceau à la première longueur d'onde, en entrée du cristal non linéaire générateur de somme de fréquences, en utilisant le troisième faisceau laser généré à la troisième longueur d'onde.

4. Générateur de faisceaux laser selon l'une quelconque des revendications précédentes, dans lequel la source élémentaire (11) permet l'émission d'un faisceau de longueur d'onde contenue dans l'une des bandes S, C ou L des télécommunications optiques.

5. Générateur de faisceaux laser selon l'une quelconque des revendications précédentes tout ou partiellement fibré.

6. Générateur de faisceaux laser selon l'une quelconque des revendications précédentes, comprenant en outre des moyens de doublage de fréquence ou de génération de somme de fréquences pour obtenir, à partir de l'un au moins des faisceaux laser à la deuxième longueur d'onde et à la troisième longueur d'onde, un faisceau laser, cohérent, à une quatrième longueur d'onde dans l'UV.

7. Module de stabilisation en fréquence des raies d'émission d'une source laser femtoseconde, comprenant :
- un générateur de faisceaux laser selon l'une quelconque des revendications 2 à 5;
- un premier module de battement optique (620) destiné à réaliser un battement optique entre un train d'impulsions émis par la source laser femtoseconde, filtré optiquement à une première longueur d'onde, et un premier faisceau laser de référence, généré par le générateur de faisceaux laser à une longueur d'onde sensiblement identique à celle du train d'impulsions filtré;
- un module d'asservissement de fréquence permettant le contrôle de la différence de fréquences entre les fréquences du train d'impulsions filtré et du premier faisceau laser de référence à partir du signal issu du module de battement optique.

8. Module de stabilisation en fréquence des raies d'émission d'une source laser femtoseconde selon la revendication 7, comprenant :
- un deuxième module de battement optique (622, 624) destiné à réaliser un battement optique entre un train d'impulsions émis par la source laser femtoseconde, filtré optiquement à une deuxième longueur d'onde donnée, et un deuxième faisceau laser de référence, généré par le générateur de faisceaux laser à une deuxième longueur d'onde sensiblement identique à celle du train d'impulsions filtré,
- le module d'asservissement comprenant un mélangeur électronique permettant d'obtenir la différence entre la première différence de fréquences entre les fréquences du train d'impulsions filtré à la première longueur d'onde et du premier faisceau laser de référence et la deuxième différence de fréquences entre les fréquences du train d'impulsions filtré à la deuxième longueur d'onde et du deuxième faisceau laser de référence.

9. Source laser femtoseconde ultrastable comprenant :
- Une source laser (610) d'émission d'impulsions femtoseconde ;
- Un module de stabilisation en fréquence des raies d'émission de la source laser d'émission d'impulsions femtoseconde selon l'une quelconque des revendications 7 ou 8.

10. Procédé de génération d'au moins trois faisceaux laser continus cohérents en phase à une première longueur d'onde dans le domaine de l'infrarouge, une deuxième et une troisième longueur d'onde dont au moins une dans le domaine du visible comprenant :
- l'émission d'un faisceau laser continu, à la première longueur d'onde infrarouge;
- l'amplification du faisceau laser continu à la première longueur d'onde;
- la séparation du faisceau laser amplifié en un premier faisceau laser continu à la première longueur d'onde et un deuxième faisceau laser continu à la première longueur d'onde, lesdits premier et deuxième faisceaux laser continus à la première longueur d'onde étant cohérents en phase ;
- la génération, à partir du premier faisceau laser à la première longueur d'onde, au moyen d'un cristal non linéaire doubleur de fréquence (15), d'un faisceau laser continu à la deuxième longueur d'onde cohérent en phase avec le premier faisceau laser continu à la première longueur d'onde, et donc avec le deuxième faisceau laser continu à la première longueur d'onde, le premier faisceau laser continu à la première longueur d'onde étant directement couplé dans le cristal non linéaire doubleur de fréquence ;
- la génération, à partir du deuxième faisceau laser continu à la première longueur d'onde et du faisceau laser continu à la deuxième longueur d'onde cohérents en phase, au moyen d'un cristal non linéaire générateur de somme de fréquences (17), d'un faisceau laser continu à la troisième longueur d'onde cohérent en phase avec le deuxième faisceau laser continu à la première longueur d'onde et avec le faisceau laser continu à la deuxième longueur d'onde,
les trois faisceaux lasers générés continus et cohérents en phase respectivement à la première, deuxième et troisième longueur d'onde étant tous trois issus du faisceau laser amplifié provenant de la source élémentaire (11), et comprenant respectivement :
- la partie résiduelle (116) du deuxième faisceau laser continu à la première longueur d'onde en sortie du cristal non linéaire générateur de somme de fréquence ou un faisceau prélevé en sortie de l'amplificateur optique (13),
- la partie résiduelle (117) du faisceau laser continu à la deuxième longueur d'onde en sorite du cristal non linéaire générateur de somme de fréquence ou un faisceau prélevé en sortie du cristal non linéaire doubleur de fréquence (15),
- le faisceau laser continu à la troisième longueur d'onde (118).

11. Procédé de génération de faisceaux laser selon la revendication 10, comprenant en outre la stabilisation de la fréquence d'émission de la source élémentaire sur une raie d'absorption de l'iode moléculaire, en utilisant le faisceau laser généré à la troisième longueur d'onde.

12. Procédé de génération de faisceaux laser selon l'une quelconque des revendications 10 ou 11, comprenant en outre le contrôle de la puissance optique du premier faisceau laser à la première longueur d'onde, en entrée du cristal non linéaire générateur de somme de fréquences, en utilisant le faisceau laser généré à la troisième longueur d'onde.

13. Procédé de génération de faisceaux laser selon l'une quelconque des revendications 11 à 12, comprenant en outre la modulation du deuxième faisceau laser à la première longueur d'onde incident dans le cristal non linéaire générateur de somme de fréquences, en fonction d'un signal de codage.

14. Procédé de stabilisation en fréquence des raies d'émission d'une source laser femto seconde (610) comprenant :
- le battement optique entre un train d'impulsions émis par la source laser femtoseconde, filtré optiquement à une première longueur d'onde, et un premier faisceau laser de référence, généré selon le procédé décrit selon l'une quelconque des revendications 11 à 12, à une longueur d'onde sensiblement identique à celle du train d'impulsions filtré;
- le contrôle de la différence de fréquences entre les fréquences du train d'impulsions filtré et du premier faisceau laser de référence à partir du signal issu du module de battement optique.

15. Procédé de stabilisation en fréquence des raies d'émission d'une source laser femtoseconde selon la revendication 14 comprenant :
- le battement optique entre un train d'impulsions émis par la source laser femtoseconde, filtré optiquement à une deuxième longueur d'onde, et un deuxième faisceau laser de référence, généré selon le procédé décrit selon l'une quelconque des revendications 11 à 12, à une deuxième longueur d'onde sensiblement identique à celle du train d'impulsions filtré ;
- le contrôle de la différence entre la première différence de fréquences entre les fréquences du train d'impulsions filtré à la première longueur d'onde et du premier faisceau laser de référence et la deuxième différence de fréquences entre les fréquences du train d'impulsions filtré à la deuxième longueur d'onde et le deuxième faisceau laser de référence.

## Patentansprüche

1. Generator von mindestens drei kontinuierlichen und jeweils in Phase kohärenten Laserstrahlen mit einer ersten Wellenlänge im Infrarotbereich, einer zweiten und einer dritten Wellenlänge, von denen mindestens eine im sichtbaren Bereich ist, wobei der Generator Folgendes umfasst:
- eine Elementarquelle (11), die konfiguriert ist, um einen kontinuierlichen Laserstrahl mit der ersten Infrarotwellenlänge zu emittieren;
- einen optischen Verstärker (13), der konfiguriert ist, um den kontinuierlichen Laserstrahl mit der ersten Wellenlänge zu verstärken;
- einen Strahlteiler, der es ermöglicht, ausgehend von dem verstärkten Laserstrahl einen ersten kontinuierlichen Laserstrahl mit der ersten Wellenlänge (114) und einen zweiten kontinuierlichen Laserstrahl mit der ersten Wellenlänge (113) zu bilden, wobei der erste und zweite kontinuierliche Laserstrahl mit der ersten Wellenlänge phasenkohärent sind;
- einen nichtlinearen Frequenzdopplungskristall (15), der konfiguriert ist, um ausgehend von dem ersten kontinuierlichen Laserstrahl mit der ersten Wellenlänge (114) einen kontinuierlichen Laserstrahl mit der zweiten Wellenlänge (115) zu erzeugen, der mit dem ersten kontinuierlichen Laserstrahl mit der ersten Wellenlänge (114) und daher mit dem zweiten kontinuierlichen Laserstrahl mit der ersten Wellenlänge (113) phasenkohärent ist, wobei der erste kontinuierliche Laserstrahl mit der ersten Wellenlänge direkt in den nichtlinearen Frequenzdopplungskristall gekoppelt ist;
- einen nichtlinearen Summenfrequenz-Erzeugungskristall (17), der konfiguriert ist, um ausgehend von dem zweiten kontinuierlichen Laserstrahl mit der ersten Wellenlänge (113) und dem kontinuierlichen Laserstrahl mit der zweiten Wellenlänge (115), die phasenkohärent sind, einen kontinuierlichen Laserstrahl mit der dritten Wellenlänge (118) zu erzeugen, der mit dem zweiten kontinuierlichen Laserstrahl mit der ersten Wellenlänge (113) und mit dem kontinuierlichen Laserstrahl mit der zweiten Wellenlänge (115) phasenkohärent ist,
wobei die drei Laserstrahlen, die kontinuierlich und phasenkohärent mit der ersten, zweiten und dritten Wellenlänge erzeugt werden, alle drei von dem verstärkten Laserstrahl aus der Elementarquelle (11) abgeleitet sind und jeweils Folgendes umfassen:
- den Restteil (116) des zweiten kontinuierlichen Laserstrahls mit der ersten Wellenlänge am Ausgang des nichtlinearen Summenfrequenz-Erzeugungskristalls oder eines Strahls, der von dem Ausgang des optischen Verstärkers (13) entnommen wird,
- den Restteil (117) des kontinuierlichen Laserstrahls mit der zweiten Wellenlängenausgabe des nichtlinearen Summenfrequenz-Erzeugungskristalls oder eines Strahls, der am Ausgang des nichtlinearen Frequenzdopplungskristalls (15) entnommen wird,
- den kontinuierlichen Laserstrahl mit der dritten Wellenlänge (118).

2. Laserstrahlgenerator nach Anspruch 1, ferner umfassend Mittel zum Stabilisieren der Emissionsfrequenz der Elementarquelle auf einer molekularen Jodabsorptionslinie unter Verwendung des dritten Laserstrahls, der mit der dritten Wellenlänge erzeugt wird.

3. Laserstrahlgenerator nach einem der vorherigen Ansprüche, ferner umfassend Mittel zum Regeln der optischen Leistung des Strahls mit der ersten Wellenlänge, am Eingang des nichtlinearen Summenfrequenz-Erzeugungskristalls unter Verwendung des dritten Laserstrahls, der mit der dritten Wellenlänge erzeugt wird.

4. Laserstrahlgenerator nach einem der obigen Ansprüche, wobei die Elementarquelle (11) die Emission eines Strahls mit einer Wellenlänge ermöglicht, der in einem der Bänder S, C oder L der optischen Telekommunikation enthalten ist.

5. Laserstrahlgenerator nach einem der vorherigen Ansprüche, der ganz oder teilweise aus Faserbündeln besteht.

6. Laserstrahlgenerator nach einem der vorherigen Ansprüche, ferner umfassend Mittel zur Frequenzdopplung oder Summenfrequenzerzeugung, um ausgehend von mindestens einem der Laserstrahlen mit der zweiten Wellenlänge und mit der dritten Wellenlänge einen kohärenten Laserstrahl zu erlangen, der mit einer vierten Wellenlänge im UV kohärent ist.

7. Frequenzstabilisierungsmodul für Emissionslinien einer Femtosekunden-Laserquelle, umfassend:
- einen Laserstrahlgenerator nach einem der Ansprüche 2 bis 5;
- ein erstes optisches Überlagerungsmodul (620) zum Durchführen einer optischen Überlagerung zwischen einer Impulsfolge, die von der Femtosekunden-Laserquelle emittiert und optisch mit einer ersten Wellenlänge gefiltert wird, und einem ersten Referenzlaserstrahl, der von dem Laserstrahlgenerator mit einer Wellenlänge erzeugt wird, die im Wesentlichen identisch mit der der gefilterten Impulsfolge ist;
- ein Frequenzregelungsmodul, das es ermöglicht, die Frequenzdifferenz zwischen den Frequenzen der gefilterten Impulsfolge und dem ersten Referenzlaserstrahl ausgehend von dem vom optischen Überlagerungsmodul erzeugten Signal zu regeln.

8. Frequenzstabilisierungsmodul für Emissionslinien einer Femtosekunden-Laserquelle nach Anspruch 7, umfassend :
- ein zweites optisches Überlagerungsmodul (622, 624) zum Durchführen einer optischen Überlagerung zwischen einer Impulsfolge, die von der Femtosekunden-Laserquelle emittiert und optisch mit einer zweiten Wellenlänge gefiltert wird, und einem zweiten Referenzlaserstrahl, der von dem Laserstrahlgenerator mit einer zweiten Wellenlänge erzeugt wird, die im Wesentlichen identisch mit der der gefilterten Impulsfolge ist;
- wobei das Regelungsmodul einen elektronischen Mischer umfasst, der es ermöglicht, die Differenz zwischen der ersten Frequenzdifferenz zwischen den Frequenzen der mit der ersten Wellenlänge gefilterten Impulsfolge und dem ersten Referenzlaserstrahl und der zweiten Frequenzdifferenz zwischen den Frequenzen der mit der zweiten Wellenlänge gefilterten Impulsfolge und dem zweiten Referenzlaserstrahl zu erlangen.

9. Ultrastabile Femtosekunden-Laserquelle, umfassend:
- eine Laserquelle (610) zur Emission von Femtosekunden-Impulsen;
- ein Frequenzstabilisierungsmodul für Emissionslinien der Femtosekunden-Laserimpulsemissionsquelle nach einem der Ansprüche 7 oder 8.

10. Verfahren zum Erzeugen von mindestens drei kontinuierlichen phasenkohärenten Laserstrahlen mit einer ersten Wellenlänge im Infrarotbereich, einer zweiten und einer dritten Wellenlänge, von denen mindestens eine im sichtbaren Bereich ist, umfassend:
- die Emission eines kontinuierlichen Laserstrahls mit der ersten Infrarotwellenlänge;
- die Verstärkung des kontinuierlichen Laserstrahls mit der ersten Wellenlänge;
- die Trennung des verstärkten Laserstrahls in einen ersten kontinuierlichen Laserstrahl mit der ersten Wellenlänge und einen zweiten kontinuierlichen Laserstrahl mit der ersten Wellenlänge, wobei der erste und zweite kontinuierliche Laserstrahl mit der ersten Wellenlänge phasenkohärent ist;
- die Erzeugung, ausgehend von dem ersten Laserstrahl mit der ersten Wellenlänge mittels eines nichtlinearen Frequenzdopplungskristalls (15), eines kontinuierlichen Laserstrahls mit der zweiten Wellenlänge, der mit dem ersten kontinuierlichen Laserstrahl mit der ersten Wellenlänge und damit mit dem zweiten kontinuierlichen Laserstrahl mit der ersten Wellenlänge phasenkohärent ist, wobei der erste kontinuierliche Laserstrahl mit der ersten Wellenlänge direkt in den nichtlinearen Frequenzdopplungskristall gekoppelt ist;
- die Erzeugung, ausgehend von dem zweiten kontinuierlichen Laserstrahl mit der ersten Wellenlänge und dem kontinuierlichen Laserstrahl mit der zweiten Wellenlänge, die phasenkohärent sind, mittels eines nichtlinearen Summenfrequenz-Erzeugungskristalls (17), eines kontinuierlichen Laserstrahls mit der dritten Wellenlänge, der mit dem zweiten kontinuierlichen Laserstrahl mit der ersten Wellenlänge und mit dem kontinuierlichen Laserstrahl mit der zweiten Wellenlänge phasenkohärent ist,
wobei die drei Laserstrahlen, die kontinuierlich und phasenkohärent mit der ersten, zweiten und dritten Wellenlänge erzeugt werden, alle drei von dem verstärkten Laserstrahl aus der Elementarquelle (11) abgeleitet sind und jeweils Folgendes umfassen:
- den Restteil (116) des zweiten kontinuierlichen Laserstrahls mit der ersten Wellenlänge am Ausgang des nichtlinearen Summenfrequenz-Erzeugungskristalls oder eines Strahls, der von dem Ausgang des optischen Verstärkers (13) entnommen wird,
- den Restteil (117) des kontinuierlichen Laserstrahls mit der zweiten Wellenlängenausgabe des nichtlinearen Summenfrequenz-Erzeugungskristalls oder eines Strahls, der am Ausgang des nichtlinearen Frequenzdopplungskristalls (15) entnommen wird,
- den kontinuierlichen Laserstrahl mit der dritten Wellenlänge (118).

11. Verfahren zum Erzeugen von Laserstrahlen nach Anspruch 10, ferner umfassend das Stabilisieren der Emissionsfrequenz der Elementarquelle auf einer molekularen Jodabsorptionslinie unter Verwendung des mit der dritten Wellenlänge erzeugten Laserstrahls.

12. Verfahren zum Erzeugen von Laserstrahlen nach einem der Ansprüche 10 oder 11, ferner umfassend das Regeln der optischen Leistung des ersten Laserstrahls mit der ersten Wellenlänge am Eingang des nichtlinearen Summenfrequenz-Erzeugungskristalls unter Verwendung des mit der dritten Wellenlänge erzeugten Laserstrahls.

13. Verfahren zum Erzeugen von Laserstrahlen nach einem der Ansprüche 11 bis 12, ferner umfassend die Modulation des zweiten Laserstrahls mit der ersten Wellenlänge, der in den nichtlinearen Summenfrequenz-Erzeugungskristall eintritt, abhängig von einem Kodierungssignal.

14. Verfahren zur Frequenzstabilisierung der Emissionslinien einer Femtosekunden-Laserquelle (610), umfassend:
- die optische Überlagerung zwischen einem von der Femtosekunden-Laserquelle emittierten, optisch mit einer ersten Wellenlänge gefilterten Impulsstrom und einem nach dem in einem der Ansprüche 11 bis 12 beschriebenen Verfahren erzeugten ersten Referenzlaserstrahl mit einer Wellenlänge, die im Wesentlichen identisch mit der des gefilterten Impulsstroms ist;
- die Regelung der Frequenzdifferenz zwischen den Frequenzen der gefilterten Impulsfolge und dem ersten Referenzlaserstrahl ausgehend von dem Signal des optischen Überlagerungsmoduls.

15. Verfahren zur Frequenzstabilisierung der Emissionslinien einer Femtosekunden-Laserquelle nach Anspruch 14, umfassend:
- die optische Überlagerung zwischen einem von der Femtosekunden-Laserquelle emittierten, optisch mit einer zweiten Wellenlänge gefilterten Impulsstrom und einem nach dem in einem der Ansprüche 11 bis 12 beschriebenen Verfahren erzeugten zweiten Referenzlaserstrahl mit einer zweiten Wellenlänge, die im Wesentlichen identisch mit der des gefilterten Impulsstroms ist;
- die Regelung der Differenz zwischen der ersten Frequenzdifferenz zwischen den Frequenzen der mit der ersten Wellenlänge gefilterten Impulsfolge und dem ersten Referenzlaserstrahl und der zweiten Frequenzdifferenz zwischen den Frequenzen der mit der zweiten Wellenlänge gefilterten Impulsfolge und dem zweiten Referenzlaserstrahl.

## Claims

1. A generator of at least three continuous and phase-coherent laser beams at a first wavelength in the infrared domain and at a second and a third wavelength, respectively, of which one at least in the visible domain, the generator comprising:
- an elementary source (11) configured to emit a continuous laser beam at the first infrared wavelength;
- an optical amplifier (13) configured to amplify the continuous laser beam at the first wavelength;
- a beamsplitter allowing, from the amplified laser beam, to generate first continuous laser beam at the first wavelength (114) and a second continuous laser beam at the first wavelength (113), said first and second continuous laser beams at the first wavelength being phase-coherent;
- a nonlinear frequency-doubling crystal (15), configured to generate, on the basis of the first continuous laser beam at the first wavelength (114), a continuous laser beam at the second wavelength (115), being phase-coherent with the first continuous laser beam at the first wavelength (114) and therefore with the second continuous laser beam at the first wavelength (113), the first continuous laser beam at the first wavelength being directly coupled in the nonlinear frequency-doubling crystal;
- a nonlinear frequency-sum-generating crystal (17), configured to generate, on the basis of the second continuous beam at the first wavelength (113) and of the continuous laser beam at the second wavelength (115) which are phase-coherent, a continuous laser beam at the third wavelength (118), being phase-coherent with the second continuous laser beam at the first wavelength (113) and with the continuous laser beam at the second wavelength (115),
the three generated continuous laser beams that are phase-coherent at the first, second and third wavelength respectively, arising all three from the amplified laser beam coming from the elementary source (11) and comprising respectively:
- the residual part (116) of the second continuous laser beam at the first wavelength at the output of the nonlinear frequency-sum-generating crystal or a beam sampled at the output of the optical amplifier (13);
- the residual part (117) of the continuous laser beam at the second wavelength at the output of the nonlinear frequency-sum-generating crystal or a beam sampled at the output of the nonlinear frequency-doubling crystal (15);
- the continuous laser beam at the third wavelength (118).

2. The generator of laser beams according to claim 1, furthermore comprising means for stabilizing the emission frequency of the elementary source on an absorption line of molecular iodine, by using the third laser beam generated at the third wavelength.

3. The generator of laser beams according to any one of the preceding claims, furthermore comprising means of control of the optical power of the beam at the first wavelength, at the input of the nonlinear frequency-sum-generating crystal, by using the third laser beam generated at the third wavelength.

4. The generator of laser beams according to any one of the preceding claims, wherein the elementary source (11) allows the emission of a beam whose wavelength is contained in one of the S, C or L optical telecommunications bands.

5. The generator of laser beams according to any one of the preceding claims, wholly or partially fibered.

6. The generator of laser beams according to any one of the preceding claims, furthermore comprising frequency-doubling or frequency-sum-generating means for obtaining, on the basis of at least one of the laser beams at the second wavelength or at the third wavelength, a laser beam coherent at a fourth wavelength in the UV.

7. A module for frequency stabilization of the emission lines of a femtosecond laser source, comprising:
- a generator of laser beams according to any one of claims 2 to 5;
- a first optical beat module (620) intended to produce an optical beating between a pulse train emitted by the femtosecond laser source, filtered optically at a first wavelength, and a first reference laser beam, generated by the generator of laser beams at a wavelength substantially identical to the wavelength of the filtered pulse train;
- a frequency slaving module allowing the control of the difference in frequencies between the frequencies of the filtered pulse train and of the first reference laser beam on the basis of the signal arising from the optical beat module.

8. The module for frequency stabilization of the emission lines of a femtosecond laser source according to claim 7, comprising:
- a second optical beat module (622, 624) intended to produce an optical beating between a pulse train emitted by the femtosecond laser source, filtered optically at a second given wavelength, and a second reference laser beam, generated by the generator of laser beams at a second wavelength substantially identical to the wavelength of the filtered pulse train,
- the slaving module comprising an electronic mixer making it possible to obtain the difference between the first difference in frequencies between the frequencies of the filtered pulse train at the first wavelength and of the first reference laser beam and the second difference in frequencies between the frequencies of the filtered pulse train at the second wavelength and of the second reference laser beam.

9. An ultrastable femtosecond laser source comprising:
- a femtosecond pulse emission laser source (610);
- a module for frequency stabilization of the emission lines of the femtosecond pulse emission laser source according to either one of claims 7 or 8.

10. A method of generating at least three continuous laser beams that are phase-coherent at a first wavelength in the infrared domain, a second and a third laser beam among which at least one is in the visible domain comprising:
- the emission of a continuous laser beam, at the first infrared wavelength;
- the amplification of the continuous laser beam at the first wavelength;
- the splitting of the amplified laser beam in a first continuous laser beam at the first wavelength and a second continuous laser beam at the first wavelength, said first and second continuous laser beams at the first wavelength being phase-coherent,
- the generation, on the basis of the first laser beam at the first wavelength by means of a nonlinear frequency-doubling crystal (15), of a continuous laser beam at the second wavelength being phase-coherent with the first continuous laser beam at the first wavelength and thus with the second continuous laser beam at the first wavelength, the first continuous laser beam at the first wavelength being directly coupled in the nonlinear frequency-doubling crystal;
- the generation, on the basis of the second continuous laser beam at the first wavelength and of the continuous laser beam at the second wavelength, the two of them being phase-coherent, by means of a nonlinear frequency-sum-generating crystal (17), of a continuous laser beam at the third wavelength phase-coherent with the second continuous laser beam at the first wavelength and with de continuous laser beam at the second wavelength,
the three generated continuous laser beams that are phase-coherent at the first, second and third wavelength respectively, arising all three from the amplified laser beam coming from the elementary source (11) and comprising respectively:
- the residual part (116) of the second continuous laser beam at the first wavelength at the output of the nonlinear frequency-sum-generating crystal or a beam sampled at the output of the optical amplifier (13);
- the residual part (117) of the continuous laser beam at the second wavelength at the output of the nonlinear frequency-sum-generating crystal or a beam sampled at the output of the nonlinear frequency-doubling crystal (15);
- the continuous laser beam at the third wavelength (118).

11. The method of generating laser beams according to claim 10, furthermore comprising the stabilization of the emission frequency of the elementary source on an absorption line of molecular iodine, by using the laser beam generated at the third wavelength.

12. The method of generating laser beams according to either one of claims 10 or 11, furthermore comprising the control of the optical power of the first laser beam at the first wavelength, at the input of the nonlinear frequency-sum-generating crystal, by using the laser beam generated at the third wavelength.

13. The method of generating laser beams according to either one of claims 11 to 12, furthermore comprising the modulation of the second laser beam at the incident first infrared wavelength in the nonlinear frequency-sum-generating crystal, as a function of a coding signal.

14. A method of frequency stabilization of the emission lines of a femtosecond laser source (610) comprising:
- the optical beating between a pulse train emitted by the femtosecond laser source, filtered optically at a first wavelength, and a first reference laser beam, generated according to the described method according to either one of claims 11 to 12, at a wavelength substantially identical to the wavelength of the filtered pulse train;
- the control of the difference in frequencies between the frequencies of the filtered pulse train and of the first reference laser beam on the basis of the signal arising from the optical beat module.

15. The method of frequency stabilization of the emission lines of a femtosecond laser source according to claim 14 comprising:
- the optical beating between a pulse train emitted by the femtosecond laser source, filtered optically at a second wavelength, and a second reference laser beam, generated according to the described method according to either one of claims 11 to 12, at a second wavelength substantially identical to the wavelength of the filtered pulse train;
- the control of the difference between the first difference in frequencies between the frequencies of the filtered pulse train at the first wavelength and of the first reference laser beam and the second difference in frequencies between the frequencies of the filtered pulse train at the second wavelength and the second reference laser beam.
